# EUROPEAN PATENT APPLICATION

(11) **EP 4 787 612 A1**
(43) Date of publication of application: **05.08.2026**
(21) Application number: 24870510.5
(22) Date of filing: 18.09.2024
(51) Int. Cl.: H01M 50/59, H01M 50/258, H01M 50/183, H01M 50/24, H01M 10/04

(54) **LARGE-CAPACITY BATTERY, ENERGY STORAGE DEVICE, GLUE INJECTION SEALING METHOD FOR LARGE-CAPACITY BATTERY, GLUE INJECTION MOLD, AND TERMINAL POST ADAPTER**

(30) Priority: 26.09.2023 CN 202311246683; 28.09.2023 CN 202322654194 U; 10.10.2023 CN 202311304300; 07.12.2023 CN 202311668462; 05.03.2024 CN 202420419176 U
(71) Applicant: Aurora Power&Energy Holdings Pte. Ltd., Singapore 189652 (SG)
(72) Inventor: KIM, Na Yeon, Xi'an, Shaanxi 710075 (CN); HAN, Seung Mi, Xi'an, Shaanxi 710075 (CN); CHOI, Ji Hwan, Xi'an, Shaanxi 710075 (CN); KIM, Do Yeon, Xi'an, Shaanxi 710075 (CN); JEONG, Gang Hyeon, Xi'an, Shaanxi 710075 (CN); KIM, Dong Uk, Xi'an, Shaanxi 710075 (CN)
(74) Representative: Winter, Brandl - Partnerschaft mbB
(86) International application number: PCT/CN2024/119261
(87) International publication number: WO 2025/066966

(57) **Abstract**

A large-capacity battery, an energy storage device, a glue injection sealing method for a large-capacity battery, a glue injection mold, and a terminal post adapter. To overcome the problem of it being difficult to assemble shared pipeline assemblies of existing large-capacity batteries, a large-capacity battery comprises a housing (5), a plurality of battery cells (21), and a liquid cooling pipe (514), wherein the plurality of battery cells (21) are arranged in the housing (5) in the same direction; a shared chamber is provided in the housing (5), and an internal cavity of the shared chamber is in communication with internal cavities of all the battery cells (21); terminal post clearance holes (4) are provided in a housing top plate (49) corresponding to terminal posts of the battery cells (21); the terminals post of the battery cells extend out of the terminal post clearance holes (4), and regions of the housing top plate (49) corresponding to the terminal post clearance holes (4) are fixed and sealed with shells of the battery cells (21); and at least a portion of the housing top plate (49) is covered with an insulating sealing glue layer (e ). No insertion is required for the shared chamber, resulting in relatively low requirements for processing precision and assembly precision; moreover, no special tooling is required, resulting in a relatively simple assembly process, thereby greatly reducing the processing difficulty and costs of such a large-capacity battery having a shared system, and making mass production achievable.

## Description

### Technical Field

The present invention relates to the field of batteries, and particularly, to a large-capacity battery, an energy storage device, a glue injection sealing method for a large-capacity battery, a glue injection mold, and a terminal post adapter.

### Background

At present, a large-capacity battery (also referred to as a battery module or a battery assembly) available on the market is generally formed by connecting a plurality of single cells in parallel or in series.

Chinese patent CN219144456U discloses a large-capacity battery, the structure of which is shown in FIG. 1. The large-capacity battery includes a battery assembly main body formed by connecting a plurality of single cells in parallel, and a shared piping assembly located at the bottom of the battery assembly main body. The shared piping assembly is configured to communicate inner cavities of the plurality of single cells, such that all the single cells in the large-capacity battery are within an electrolyte system. The large-capacity battery may enhance the uniformity of the electrolyte of the single cells within the large-capacity battery via the shared piping assembly, thereby enhancing the cycle life. Furthermore, the shared piping assembly allows for replenishment of the electrolyte in the large-capacity battery, thereby extending the service life of the large-capacity battery and enhancing the operational safety of the large-capacity battery.

However, such a shared piping assembly is formed by directly inserting and sealing a plurality of sub-pipes 01 and an intermediate connecting pipe 02 by interference fit. In this configuration, the plurality of sub-pipes 01 are disposed on lower cover plates 03 of the single cells, extending along an arrangement direction of the single cells 21. The sub-pipes are integrally formed with the lower cover plates 03 of the single cells by co-extrusion and are in communication with openings in the lower cover plates 03 of the single cells.

During assembly, two ends of each sub-pipe 01 serve as connection ends for the intermediate connecting pipe 02. When two single cells 21 are connected, one end of the sub-pipe on the two single cells 21 is inserted into two ends of the intermediate connecting pipe 02, respectively.

During the insertion process of the shared piping assembly, it is required that the sub-pipes 01 and the intermediate connecting pipe 02 be coaxial to achieve an effective connection. However, the coaxiality of the sub-pipes and the intermediate connecting pipe 02 is difficult to ensure for the following reasons:
1) The sub-pipes and the lower cover plate form an integral member. If, in each integral member, the positions of the sub-pipes on the lower cover plate deviate slightly, or if the dimensions of the sub-pipes themselves vary slightly, the coaxiality of the sub-pipes may be compromised during insertion.
2) When the integral members above are welded to a cylindrical body, positional inconsistencies of the sub-pipes relative to the cylindrical body may arise due to variations in the welding process, which may lead to deviations in coaxiality of the sub-pipes during insertion.
3) This solution requires the use of dedicated tooling for insertion. Improper use of the tooling, or errors by the operators, may easily result in deviations in the coaxiality of the sub-pipes.

In addition, during insertion, the deviations among the sub-pipes tend to accumulate as the number of inserted sub-pipes increases, making it increasingly difficult to maintain coaxiality. As a result, the yield of the assembly process decreases with an increasing number of inserted sub-pipes.

In summary, in this solution, since the sub-pipes of two adjacent single cells are difficult to maintain coaxiality, during insertion, the sub-pipes may shift relative to the lower cover plate, or the lower cover plate may shift relative to the cylindrical body, potentially resulting in damage to the battery.

### Summary

To overcome the problem of assembly difficulties of a shared piping assembly in conventional large-capacity batteries, the present invention provides the following five implementation modes:

### Implementation mode 1:

This embodiment provides a large-capacity battery, including a shell, a plurality of single cells, and a liquid cooling pipe; the plurality of single cells are arranged in the shell along a same direction; the shell is provided with a shared chamber, an inner cavity of the shared chamber being in communication with inner cavities of all the single cells; electrode post terminal clearance holes corresponding to electrode post terminals of the single cells are formed in a top plate of the shell; the electrode post terminals of the single cells extend through the corresponding electrode post terminal clearance holes, and a region of the top plate of the shell corresponding to the electrode post terminal clearance hole is fixedly sealed to a housing of the single cell; portions of the electrode post terminals of the single cells extending through the electrode post terminal clearance holes are provided with clamping portions of the liquid cooling pipe; the liquid cooling pipe includes a main body of the liquid cooling pipe, as well as an inlet end and an outlet end of a liquid cooling pipe, the main body of the liquid cooling pipe being fixed to the clamping portions of the liquid cooling pipe; an insulating sealing adhesive layer is laid on the top plate of the shell; and electrical connection parts of the electrode post terminals of the single cells extend through the insulating sealing adhesive layer, and the inlet end and the outlet end of the liquid cooling pipe extend through the insulating sealing adhesive layer.

In this embodiment, the plurality of single cells are placed in the interior of a shell with a shared chamber. By communicating the shared chamber with the inner cavities of the single cells located within the shell, the electrolyte and/or gas of the single cells are shared to ensure consistency of the single cells. That is, the electrolyte and/or gas of the single cells are in communication with each other, allowing the electrolyte and/or gas of all single cells to be within the same system. This reduces the differences between the single cells, enhancing consistency of the single cells and thereby enhancing the cycle life of the large-capacity battery to some extent. In this embodiment, the shared chamber does not require insertion, and the coaxiality of the sub-pipes along the arrangement direction of the single cells need not be considered. Consequently, the requirements for machining precision and assembly precision are relatively low. Moreover, no dedicated tooling is required, and the assembly process is simplified, greatly reducing the manufacturing difficulty and manufacturing cost of large-capacity batteries with a shared system, thereby enabling mass production.

In addition, this embodiment employs a single-stage heat transfer method, in which the liquid cooling pipe is connected to the electrode post terminals of the single cells to transfer the heat concentrated at the electrode post terminals of the single cells to the exterior for dissipation. This heat dissipation method enables balanced dissipation of all the single cells within the large-capacity battery, thereby enhancing the operational safety of the large-capacity battery. Moreover, to address the problem that, during long-term use, condensation may form on the surface of the liquid cooling pipe due to the temperature difference between the interior and exterior of the liquid cooling pipe, and that, when the condensation accumulates to a certain extent, it may penetrate the gap between the electrode post terminals and the electrode post terminal clearance holes, causing a short circuit, this embodiment provides an insulating sealing adhesive layer on the top plate of the shell (the gap between the electrode post terminals and the electrode post terminal clearance holes is further provided with an insulating sealing adhesive layer). When condensation forms on the surface of the liquid cooling pipe fixed to the electrode post terminal, the insulating sealing adhesive layer blocks the condensation from entering the gap between the electrode post terminals and the electrode post terminal clearance holes, preventing battery short circuits. **In** this embodiment, the thickness of the insulating sealing adhesive layer may be increased to fully embed the main body of the liquid cooling pipe within the insulating sealing adhesive layer, thereby further enhancing the anti-condensation effect. **In** addition, this configuration may render the top of the large-capacity battery relatively flat.

The clamping portions of the liquid cooling pipe may be through holes or through grooves formed in the electrode post terminals of the single cells.

The large-capacity battery above may further include an insulating protective cover. The insulating protective cover is used to provide insulation protection for the electrode post terminals, avoiding potential safety hazards caused by exposure of the electrode post terminals during operation of the large-capacity battery, and further avoiding foreign objects from the external environment from falling into the electrode post terminal positions and causing short-circuiting of the large-capacity battery, thereby enhancing the safety of the large-capacity battery. The insulating protective cover may be designed as a modular structure, with the insulating frame body serving as a glue injection mold. After the glue injection is completed, no removal is required, thereby simplifying the glue injection process and avoiding the risk of damaging the adhesive layer structure during removal. In addition, the insulating sealing adhesive layer may also enhance the bonding strength between the insulating frame body and the top of the large-capacity battery.

In an embodiment, the shared chamber is an electrolyte shared chamber, which is a liquid channel located in a bottom plate of the shell, the liquid channel being in communication with electrolyte regions of the inner cavities of the single cells. By communicating the electrolyte shared chamber with the electrolyte regions of the inner cavities of the single cells located within the shell, the electrolytes of the single cells are shared to ensure consistency of the single cells, thereby enhancing the cycle life of the large-capacity battery to some extent. In addition, the electrolyte shared chamber is integrally formed during the machining of the bottom plate of the shell, facilitating manufacturing and providing a simple structure.

In an embodiment, the shared chamber is a gas shared chamber, which is a gas channel located in the top plate of the shell, the gas channel being in communication with gas regions of the inner cavities of the single cells. By communicating the gas shared chamber with the gas regions of the inner cavities of the single cells within the shell, the gases of the single cells are balanced, thereby enhancing the consistency among the single cells and, in turn, enhancing the cycle life of the large-capacity battery to some extent. In addition, the gas shared chamber is integrally formed during the machining of the top plate of the shell, facilitating manufacturing and providing a simple structure.

In an embodiment, when the dimensions of the grouped single cells in the z direction vary significantly, protrusions may be disposed on a surface of the top plate of the shell close to the single cells. Each protrusion is provided with stepped through holes penetrating the top plate of the shell and serving as the electrode post terminal clearance holes. Smaller holes of the stepped through holes are closer to the single cells, and hole depths of the smaller holes are less than hole depths of larger holes, allowing the stepped surface to conform more easily to the housing of the single cell. The stepped surface may then be sealed to the housing of the single cell by fusion welding.

### Implementation mode 2:

This embodiment provides a large-capacity battery, including a shell, a plurality of single cells, and terminal post adapters, wherein the plurality of single cells are arranged side by side within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; the electrode post terminals of the single cells are connected to the terminal post adapters via the electrode post terminal clearance holes, and regions of the shell corresponding to the electrode post terminal clearance holes are fixedly sealed to housings of the single cells; and an insulating sealing adhesive layer is disposed in a gap between a bottom surface of each terminal post adapter and the top plate of the shell, the bottom surface of each terminal post adapter above being a surface thereof that is parallel to and close to the top plate of the shell.

In this embodiment, the plurality of single cells are placed in the interior of a shell. By communicating the electrolyte shared chamber with the inner cavities of the single cells located within the shell, the electrolyte of the single cells is shared to ensure consistency of the single cells. That is, the electrolyte of the single cells is in communication with each other, allowing the electrolyte of all single cells to be within the same system. This reduces the differences between the single cells, enhancing consistency of the single cells and thereby enhancing the cycle life of the large-capacity battery to some extent. In this embodiment, the shared chamber does not require insertion, and the coaxiality of the sub-pipes along the arrangement direction of the single cells need not be considered. Consequently, the requirements for machining precision and assembly precision are relatively low. Moreover, no dedicated tooling is required, and the assembly process is simplified, greatly reducing the manufacturing difficulty and manufacturing cost of large-capacity batteries with a shared system, thereby enabling mass production.

Moreover, this embodiment involves injecting an insulating sealing adhesive into the gap between the top plate of the shell and the bottom surface of the terminal post adapter, thereby forming an insulating sealing adhesive layer in the gap. When condensation forms on the surface of the liquid cooling pipe fixed to the terminal post adapter, the insulating sealing adhesive layer blocks the condensation from entering the gap between the terminal post adapter and the top plate of the shell, preventing battery short circuits. In addition, forming an insulating sealing adhesive layer in the gap between the top plate of the shell and the bottom surface of the terminal post adapter may enhance the stability of the terminal post adapter on the shell, thereby further enhancing the structural stability of the large-capacity battery.

To further enhance the insulation and sealing performance between the terminal post adapter and the top plate of the shell, an insulating sealing adhesive layer is disposed on a top surface and side surfaces of each terminal post adapter; the top surface of the terminal post adapter is a surface thereof that is parallel to and away from the top plate of the shell; the side surfaces of the terminal post adapter are surfaces thereof that are perpendicular to a first surface and a second surface. **In** other words, the entire terminal post adapter may be encapsulated with the insulating sealing adhesive. In this case, an electrical connecting component is disposed on the terminal post adapter. The electrical connecting component above is configured to connect to an electrical connector and to prevent insulating sealing adhesive from overflowing from part of a glue injection region. In some cases, the part of the glue injection region here is the top surface of the terminal post adapter, while in other cases, the part of the glue injection region is the part of the surface of the electrical connection component.

To prevent the insulating sealing adhesive from overflowing from the top plate of the shell, the large-capacity battery further includes an annular adhesive retaining protrusion. The annular adhesive retaining protrusion above is located at the edge of the top plate of the shell and extends along a circumferential direction of the top plate of the shell. A portion of the shell of the large-capacity battery serves as a glue injection mold, so that after the glue injection is completed, no removal is required, thereby simplifying the glue injection process and avoiding the risk of damaging the adhesive layer structure during removal.

To further enhance the safety performance of such a large-capacity battery, the large-capacity battery further includes an insulating protective cover. The insulating protective cover provides insulation protection for the terminal post adapter, avoiding potential safety hazards that may occur if only an insulating sealing adhesive layer is disposed in the gap between the top plate of the shell and the lower end surface of the terminal post adapter during the operation of the large-capacity battery. It further avoids foreign objects from the external environment from falling into the terminal post adapter positions and causing short-circuiting of the large-capacity battery, thereby enhancing the safety of the large-capacity battery.

In this embodiment, the insulating frame body of the insulating protective cover may be used as the glue injection mold. After the glue injection is completed, no removal is required. Moreover, the bonding strength between the insulating frame body and the top of the large-capacity battery is further enhanced.

In this embodiment, an annular adhesive retaining ring is disposed at the outer edge of the electrical connecting post clearance hole, cooperating with the annular groove in the terminal post adapter. When poor soldering occurs between the electrical connecting post of the terminal post adapter and the electrode post terminals of the single cells, the annular adhesive retaining ring prevents the insulating sealing adhesive from entering the space between the electrical connecting post and the electrode post terminals of the single cells, avoiding any adverse impact on their electrical conductivity.

### Implementation mode 3:

This embodiment provides a large-capacity battery, including a shell, a plurality of single cells, and terminal post adapters, wherein the plurality of single cells are arranged side by side within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; the electrode post terminals of the single cells are connected to the terminal post adapters via the electrode post terminal clearance holes; an annular gap is formed between the electrode post terminal clearance hole and the electrode post terminal of the single cell, or between the electrode post terminal clearance hole and the terminal post adapter, or among the electrode post terminal clearance hole, the electrode post terminal of the single cell, and the terminal post adapter; and an insulating sealing adhesive layer is filled in the annular gap above.

When the electrode post terminals of the single cells extend through the electrode post terminal clearance holes to connect to the terminal post adapter, the annular gap refers to an annular gap between the electrode post terminal clearance holes and the electrode post terminals of the single cells. When part of the terminal post adapter extends into the electrode post terminal clearance holes to connect to the electrode post terminals of the single cells located within the inner cavity of the shell, the annular gap refers to an annular gap between the electrode post terminal clearance holes and the terminal post adapter. When the electrode post terminals of the single cells partially extend into the electrode post terminal clearance holes and part of the terminal post adapter extends into the electrode post terminal clearance holes to connect to the electrode post terminals of the single cells located within the clearance holes, the annular gap refers to an annular gap formed among the electrode post terminal clearance holes, the terminal post adapter, and the electrode post terminals of the single cells.

In this embodiment, the plurality of single cells are placed in the interior of a shell. By communicating the electrolyte shared chamber with the inner cavities of the single cells located within the shell, the electrolyte of the single cells is shared to ensure consistency of the single cells. That is, the electrolyte of the single cells is in communication with each other, allowing the electrolyte of all single cells to be within the same system. This reduces the differences between the single cells, enhancing consistency of the single cells and thereby enhancing the cycle life of the large-capacity battery to some extent. In this embodiment, the shared chamber does not require insertion, and the coaxiality of the sub-pipes along the arrangement direction of the single cells need not be considered. Consequently, the requirements for machining precision and assembly precision are relatively low. Moreover, no dedicated tooling is required, and the assembly process is simplified, greatly reducing the manufacturing difficulty and manufacturing cost of large-capacity batteries with a shared system, thereby enabling mass production.

Moreover, in this embodiment, an insulating sealing adhesive layer is filled into the annular gap between the electrode post terminal clearance holes and the electrode post terminals of the single cells and/or the terminal post adapter, thereby sealing this part and enhancing the overall sealing performance of the shell of the large-capacity battery. Compared with the embodiment in the Background that employs two welding steps, the process in this embodiment is simpler and easier to operate. In addition, even if the tops (i.e., upper cover plates) of the single cells are uneven, causing gaps between the upper cover plates of certain single cells and the shell in some large-capacity batteries, no sealing failure occurs.

In this embodiment, elastic adhesive retaining rings are sleeved around the electrode post terminals of the single cells. After the top plate of the shell is fixed, the pressure from the top plate of the shell causes the elastic adhesive retaining rings to seal the gaps around the electrode post terminal clearance holes and between the top plate of the shell and the upper cover plates of the single cells. During the glue injection into the annular gaps, the insulating sealing adhesive layer is blocked by the elastic adhesive retaining rings and does not penetrate the electrolyte in the inner cavity of the shell. In addition to retaining the adhesive, the elastic adhesive retaining rings further provide sealing, and in combination with the insulating sealing adhesive layer, achieve an enhanced sealing effect.

In an embodiment, the lower end of the elastic adhesive retaining ring above is bonded to the upper cover plate of the single cell, avoiding displacement of the elastic adhesive retaining ring during assembly and ensuring that it may effectively perform the adhesive retaining and sealing functions.

In an embodiment, an annular notch is formed at an upper end of the elastic adhesive retaining ring above such that the upper end of the elastic adhesive retaining ring forms a first mating surface and a second mating surface, the first mating surface being in close contact with a lower surface of the top plate of the shell, and the second mating surface being in close contact with a hole wall of the corresponding electrode post terminal clearance hole at an end thereof close to the upper cover plate of the single cell. The adhesive retaining and sealing performance of the elastic adhesive retaining ring may be further enhanced.

To enhance the bonding strength between the insulating sealing adhesive layer and the annular gap, in this embodiment, a groove is formed in at least one component of the electrode post terminal clearance hole or the terminal post adapter. During glue injection into the annular gap, the adhesive penetrates the groove, forming a stop-fit structure at this part, which further increases the bonding strength of the insulating sealing adhesive layer within the annular gap and reduces the likelihood of detachment of the insulating sealing adhesive layer.

### Implementation mode 4:

A first aspect of this embodiment proposes a large-capacity battery, including a shell and n single cells arranged side by side within the shell, wherein n is an integer greater than 1; an inner cavity of the shell is in communication with inner cavities of all the single cells; electrode post terminal clearance holes corresponding to polarity terminals of the single cells are formed in a top plate of the shell; the polarity terminals of the single cells extend through the corresponding electrode post terminal clearance holes, and a region of the top plate of the shell corresponding to the electrode post terminal clearance hole is fixedly sealed to a housing of the single cell; and
a first insulating sealing adhesive layer is disposed in a gap between the polarity terminal of each single cell and the corresponding electrode post terminal clearance hole, the first insulating sealing adhesive layer being an insulating sealing adhesive layer having temperature resistance higher than a temperature of thermal runaway gases.

In this embodiment, the plurality of single cells are placed in the interior of a shell with a shared chamber. By communicating the shared chamber with the inner cavities of the single cells located within the shell, the electrolyte and/or gas of the single cells are shared to ensure consistency of the single cells. That is, the electrolyte and/or gas of the single cells are in communication with each other, allowing the electrolyte and/or gas of all single cells to be within the same system. This reduces the differences between the single cells, enhancing consistency of the single cells and thereby enhancing the cycle life of the large-capacity battery to some extent. In this embodiment, the shared chamber does not require insertion, and the coaxiality of the sub-pipes along the arrangement direction of the single cells need not be considered. Consequently, the requirements for machining precision and assembly precision are relatively low. Moreover, no dedicated tooling is required, and the assembly process is simplified, greatly reducing the manufacturing difficulty and manufacturing cost of large-capacity batteries with a shared system, thereby enabling mass production.

Moreover, the first insulating sealing adhesive layer is in direct contact with the electrode post terminals of the single cells, providing protection and fixation for the electrode post terminals of the single cells in place. Under the protection and fixation of this first insulating sealing adhesive layer, even in the event of thermal runaway, the electrode post terminals of the single cells are unlikely to detach or form cracks with the upper cover plate of the single cell, preventing leakage of thermal runaway gases through the gaps between the polarity terminals of the single cells and the electrode post terminal clearance holes. In addition, the first insulating sealing adhesive layer also functions to seal the gaps between the polarity terminals of the single cells and the electrode post terminal clearance holes, further enhancing the sealing performance at the electrode post terminal clearance hole parts of the shell.

In an embodiment, the large-capacity battery above further includes a heat transfer pipe, wherein a heat transfer pipe clamping portion is disposed on a portion of the polarity terminal of the single cell extending through the electrode post terminal clearance hole, and the heat transfer pipe is fixed within the heat transfer pipe clamping portion. By disposing a heat transfer pipe clamping portion at the part where the polarity terminal extends through the electrode post terminal clearance hole, the heat transfer pipe is fixed within the heat transfer pipe clamping portion, allowing direct connection between the heat transfer pipe and the polarity terminal of the large-capacity battery. This arrangement enables timely dissipation of heat concentrated at the polarity terminal, thereby improving the heat dissipation performance of the large-capacity battery. In addition, when the temperature of the large-capacity battery falls below the set threshold, a heat transfer medium with a higher temperature is introduced into the heat transfer pipe to heat the large-capacity battery. By controlling the temperature of the heat transfer medium, it ensures that the large-capacity battery always operates within the normal working temperature.

In an embodiment, the heat transfer pipe clamping portion is a through hole or a through groove formed in the polarity terminal of the single cell.

In an embodiment, the heat transfer pipe is a liquid cooling pipe, and the liquid cooling pipe includes a main body, as well as an inlet end and an outlet end of a liquid cooling pipe; and
a second insulating sealing adhesive layer is laid on the top plate of the shell; electrical connection parts of the polarity terminals of the single cells extend through the second insulating sealing adhesive layer; the main body of the liquid cooling pipe is located within the second insulating sealing adhesive layer; and the inlet end and the outlet end of the liquid cooling pipe extend through the second insulating sealing adhesive layer. The second insulating sealing adhesive layer completely covers the liquid cooling pipe, thereby providing enhanced safety for the large-capacity battery. In addition, by embedding the main body of the liquid cooling pipe within the second insulating sealing adhesive layer, the liquid cooling pipe may be fixed or positioned, enhancing the stability of the liquid cooling pipe within the large-capacity battery. Moreover, this arrangement may enhance the flatness of the top structure of the large-capacity battery.

In an embodiment, the second insulating sealing adhesive layer may be formed using a potting adhesive commonly used for electronic components, such as an epoxy potting adhesive with a temperature resistance below 320°C. Compared with epoxy potting adhesives with a temperature resistance above 320°C, such epoxy potting adhesives have a lower cost.

In an embodiment, the large-capacity battery above further includes an insulating protective cover disposed on a top of the shell of the large-capacity battery, wherein the polarity terminals of the single cells are located within the insulating protective cover; a length direction of the shell is defined as an x direction, a width direction as a y direction, and a height direction as a z direction; a passage through which the heat transfer pipe extends is disposed in a sidewall of the insulating protective cover; and slits are formed in two sidewalls of the insulating protective cover parallel to an xz plane, through which the electrical connection parts of the electrode post terminals of the single cells are connected to electrical connectors.

The insulating protective cover is used to provide insulation protection for the polarity terminals, avoiding potential safety hazards caused by exposure of the polarity terminals during operation of the large-capacity battery, and further avoiding foreign objects from the external environment from falling into the polarity terminal positions and causing short-circuiting of the large-capacity battery, thereby enhancing the safety of the large-capacity battery.

In an embodiment, the insulating protective cover includes an insulating frame body and an insulating cover plate; a lower end of the insulating frame body is fixed to a top of the large-capacity battery; an upper end of the insulating frame body is snap-fitted with the insulating cover plate; and notches are formed in upper ends of sidewalls of the insulating frame body parallel to an xz plane, the notches cooperating with the insulating cover plate to form the slits.

The insulating protective cover is designed as a modular structure, with the insulating frame body serving as a glue injection mold. After the glue injection is completed, no removal is required, thereby simplifying the glue injection process and avoiding the risk of damaging the adhesive layer structure during removal. In addition, the second insulating sealing adhesive layer may also enhance the bonding strength between the insulating frame body and the top of the large-capacity battery.

In an embodiment, the first insulating sealing adhesive layer is an epoxy resin potting adhesive layer having temperature resistance higher than 320°C.

In an embodiment, the large-capacity battery above further includes 2n sealing connectors, wherein each sealing connector corresponds to one polarity terminal; each sealing connector is a hollow component, one end of the hollow component being sealingly connected to a region of the housing of the single cell surrounding the corresponding polarity terminal, and the other end of the hollow component being sealingly connected to a region of the top plate of the shell corresponding to the electrode post terminal clearance hole; and the first insulating sealing adhesive layer is located in a gap between the sealing connector and the polarity terminal.

A second aspect of this embodiment further provides an energy storage device, including a case, an explosion vent manifold, and a plurality of large-capacity batteries described above located within the case, wherein explosion vent pipes of the large-capacity batteries are in communication with the explosion vent manifold, and an outlet end of the explosion vent manifold extends through the case. When a single cell within any large-capacity battery in the energy storage device undergoes thermal runaway, the thermal runaway gases are discharged only via the explosion vent manifold, reducing the risk of thermal runaway gas diffusion, explosion of the large-capacity battery, or even explosion of the energy storage device.

### Implementation mode 5:

A first aspect of this embodiment provides a glue injection sealing method for a large-capacity battery, wherein the large-capacity battery includes a shell, a plurality of single cells, and a terminal post adapter; the plurality of single cells are arranged in parallel within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; and the sealing method includes the following steps:
preliminary sealing by welding:
welding a region of the top plate of the shell surrounding the electrode post terminal clearance holes to an upper cover plate of the single cell to achieve preliminary sealing;
secondary sealing by glue injection:
   sleeving a glue injection mold over a terminal post adapter main body, forming a glue injection space between the glue injection mold, the terminal post adapter, the electrode post terminals of the single cells, the upper cover plate of the single cell within welding tracks, and the top plate of the shell; injecting adhesive into the glue injection space to achieve secondary sealing; and
   removal:
      after an adhesive layer is cured, removing the glue injection mold.

In this embodiment, the plurality of single cells are placed in the interior of a shell with an electrolyte shared chamber. By communicating the electrolyte shared chamber with the inner cavities of the single cells located within the shell, the electrolyte of the single cells is shared to ensure consistency of the single cells. That is, the electrolyte of the single cells is in communication with each other, allowing the electrolyte of all single cells to be within the same system. This reduces the differences between the single cells, enhancing consistency of the single cells and thereby enhancing the cycle life of the large-capacity battery to some extent. In this embodiment, the electrolyte shared chamber does not require insertion, and the coaxiality of the sub-pipes along the arrangement direction of the single cells need not be considered. Consequently, the requirements for machining precision and assembly precision are relatively low. Moreover, no dedicated tooling is required, and the assembly process is simplified, greatly reducing the manufacturing difficulty and manufacturing cost of large-capacity batteries with a shared system, thereby enabling mass production.

Moreover, in this embodiment, a welding process is used to weld the region of the top plate of the shell surrounding the electrode post terminal clearance holes to the upper cover plates of the single cells, achieving preliminary sealing. A glue injection process is then employed to fill insulating sealing adhesive into part areas of the glue injection space, including the gap between the inner surface of the top plate of the shell within the welding tracks and the upper cover plates of the single cells, the gaps between the electrode post terminal clearance holes and the electrode post terminals of the single cells or the terminal post adapter located therein, and the gaps between the glue injection mold and the electrical connecting posts of the terminal post adapter, thereby achieving secondary sealing. In the present invention, by employing these two sealing steps, the sealing performance at the electrode post terminal clearance hole parts in the top of the shell of the large-capacity battery is ensured, resulting in enhanced sealing reliability of the shell.

In an embodiment, by injecting adhesive into the glue injection space via the glue injection channels formed in the terminal post adapter, the contact area between the glue injection mold and the insulating sealing adhesive may be reduced, thereby decreasing the difficulty of removal.

A second aspect of this embodiment further provides a terminal post adapter for a large-capacity battery, including a terminal post adapter main body, wherein at least one glue injection channel is formed in the terminal post adapter main body above, the glue injection channel above being a through hole penetrating the terminal post adapter main body and configured for communication with a glue injection space.

In an embodiment, the terminal post adapter further includes electrical connecting posts fixed on and projecting from the terminal post adapter main body, wherein
blind holes are formed in the terminal post adapter main body, through which the electrical connecting posts are connected to electrode post terminals of single cells.

In an embodiment, a through groove for mounting a heat transfer pipe is disposed in the terminal post adapter main body above, and the through groove above is sized to accommodate the heat transfer pipe.

A third aspect of this embodiment further provides a glue injection mold for a large-capacity battery, including an annular adhesive retaining plate, wherein the annular adhesive retaining plate above is shaped to fit a terminal post adapter main body and is configured to be sleeved over the terminal post adapter main body, an inner wall of the annular adhesive retaining plate being in close contact with an outer wall of the terminal post adapter main body.

In an embodiment, the glue injection mold further includes an annular support plate, wherein the annular support plate above is disposed on an outer side of a lower end of the annular adhesive retaining plate and extends along a circumferential direction of the annular adhesive retaining plate.

In an embodiment, a material of the annular adhesive retaining plate is a PP material. The removal difficulty may be further reduced, and after removal, the glue injection mold made of this material may be reused.

To further reduce removal difficulty, the annular adhesive retaining plate above is a modular member, including a first semi-annular adhesive retaining plate and a second semi-annular adhesive retaining plate that are symmetrical to each other.

In an embodiment, a first plate and a second plate are disposed at two ends of the first semi-annular adhesive retaining plate above, respectively; and a third plate and a fourth plate are disposed at two ends of the second semi-annular adhesive retaining plate, respectively; and
the first plate engages with the third plate, and the second plate engages with the fourth plate, such that the first semi-annular adhesive retaining plate and the second semi-annular adhesive retaining plate are interlocked to form the annular adhesive retaining plate.

### Brief Description of the Drawings

FIG. 1 is a schematic structural diagram of a large-capacity battery in the Background;
FIG. 2 is a partial schematic structural diagram of a large-capacity battery according to Embodiment 1;
FIG. 3 is a partial exploded view of a large-capacity battery according to Embodiment 1;
FIG. 4 is a schematic structural diagram of a top plate of a shell according to Embodiment 1;
FIG. 5 is a cross-sectional view of a top plate of a shell according to Embodiment 1;
FIG. 6 is a schematic structural diagram of a large-capacity battery according to Embodiment 1;
FIG. 7 is a partial exploded view of a large-capacity battery according to Embodiment 1;
FIG. 8 is a schematic structural diagram of a large-capacity battery according to Embodiment 2;
FIG. 9 is a partial exploded view of a large-capacity battery according to Embodiment 2;
FIG. 10 is a schematic structural diagram of a large-capacity battery in the related art;
FIG. 11 is a cross-sectional view of a large-capacity battery in the related art;
FIG. 12 is a schematic structural diagram of a large-capacity battery according to Embodiment 3;
FIG. 13 is a schematic structural diagram of a terminal post adapter according to Embodiment 3 and Embodiment 18;
FIG. 14 is a cross-sectional view of a large-capacity battery according to Embodiment 3;
FIG. 15 is a schematic structural diagram of a large-capacity battery according to Embodiment 4;
FIG. 16 is a schematic structural diagram of a terminal post adapter according to Embodiment 4 and Embodiment 13;
FIG. 17 is a cross-sectional view of a large-capacity battery according to Embodiment 5;
FIG. 18 is a schematic structural diagram of a large-capacity battery according to Embodiment 6;
FIG. 19 is a partial exploded view of a large-capacity battery according to Embodiment 6;
FIG. 20 is a schematic structural diagram of an insulating frame body according to Embodiment 7;
FIG. 21 is a partial schematic structural diagram of a large-capacity battery according to Embodiment 7;
FIG. 22 is a cross-sectional view of a large-capacity battery according to Embodiment 7;
FIG. 23 is a schematic structural diagram of a large-capacity battery according to Embodiment 7;
FIG. 24 is a schematic structural diagram of an insulating frame body according to Embodiment 8;
FIG. 25 is a partial schematic structural diagram of a large-capacity battery according to Embodiment 8;
FIG. 26 is a partial cross-sectional view of a large-capacity battery according to Embodiment 8;
FIG. 27 is a schematic structural diagram of a terminal post adapter with an electrical connection component according to Embodiment 9;
FIG. 28 is a schematic structural diagram of a large-capacity battery without an insulating protective cover according to Embodiment 9;
FIG. 29 is a partial schematic structural diagram of a large-capacity battery with an insulating protective cover according to Embodiment 9;
FIG. 30 is a schematic structural diagram of an electrical connection component according to Embodiment 10;
FIG. 31 is a schematic structural diagram illustrating cooperation between an electrical connection component and a terminal post adapter according to Embodiment 10;
FIG. 32 is a cross-sectional view of a large-capacity battery according to Embodiment 10;
FIG. 33 is a schematic structural diagram of a terminal post adapter according to Embodiment 11;
FIG. 34 is a cross-sectional view of a large-capacity battery according to Embodiment 11;
FIG. 35 is a partial cross-sectional view of a large-capacity battery according to Embodiment 11;
FIG. 36 is a schematic structural diagram of an electrical connection component according to Embodiment 12;
FIG. 37 is a cross-sectional view of a large-capacity battery according to Embodiment 12;
FIG. 38 is a partial schematic structural diagram of another large-capacity battery in the related art;
FIG. 39 is a schematic structural diagram of a large-capacity battery according to Embodiment 13;
FIG. 40 is a schematic structural diagram of a top plate of a shell according to Embodiment 13;
FIG. 41 is a cross-sectional view of a large-capacity battery according to Embodiment;
FIG. 42 is a cross-sectional view of a large-capacity battery according to Embodiment 14;
FIG. 43 is a cross-sectional view of another large-capacity battery according to Embodiment 14;
FIG. 44 is a schematic structural diagram of an elastic adhesive retaining ring according to Embodiment 15;
FIG. 45 is a cross-sectional view of a large-capacity battery according to Embodiment 15;
FIG. 46 is a schematic structural diagram of a top plate of a shell according to Embodiment 16;
FIG. 47 is a partial cross-sectional view of a large-capacity battery according to Embodiment 16;
FIG. 48 is a cross-sectional view of a large-capacity battery according to Embodiment 16;
FIG. 49 is a schematic structural diagram of a terminal post adapter according to Embodiment 17;
FIG. 50 is a cross-sectional view of a large-capacity battery according to Embodiment 17;
FIG. 51 is an enlarged partial cross-sectional view of a large-capacity battery according to Embodiment 17;
FIG. 52 is an exploded view of a large-capacity battery in the related art;
FIG. 53 is a schematic structural diagram of a large-capacity battery according to Embodiment 19;
FIG. 54 is a partial schematic structural diagram of a large-capacity battery according to Embodiment 19 (a schematic structural diagram after removal of a right end plate shown in FIG. 53);
FIG. 55 is a partial cross-sectional view of a large-capacity battery according to Embodiment 19;
FIG. 56 is a schematic structural diagram of a large-capacity battery according to Embodiment 20;
FIG. 57 is a partial cross-sectional view of a large-capacity battery according to Embodiment 20;
FIG. 58 is a schematic structural diagram of a large-capacity battery according to Embodiment 21;
FIG. 59 is a schematic structural diagram of another large-capacity battery according to Embodiment 21;
FIG. 60 is a schematic structural diagram of a large-capacity battery according to Embodiment 22;
FIG. 61 is a partial exploded schematic view of a large-capacity battery according to Embodiment 22;
FIG. 62 is a partial schematic structural diagram of an energy storage device according to Embodiment 23;
FIG. 63 is a schematic structural diagram of a large-capacity battery according to Embodiment 24;
FIG. 64 is a cross-sectional view of a large-capacity battery according to Embodiment 24;
FIG. 65 is a schematic structural diagram of a terminal post adapter according to Embodiment 24;
FIG. 66 is a schematic structural diagram of a glue injection mold according to Embodiment 24;
FIG. 67 is a partial schematic structural diagram of a corresponding large-capacity battery during preliminary sealing by welding according to Embodiment 24;
FIG. 68 is a partial schematic structural diagram of a corresponding large-capacity battery after welding a terminal post adapter according to Embodiment 24;
FIG. 69 is a partial schematic structural diagram of a corresponding large-capacity battery during secondary sealing by glue injection according to Embodiment 24;
FIG. 70 is a cross-sectional view of a corresponding large-capacity battery during secondary sealing by glue injection according to Embodiment 24;
FIG. 71 is an enlarged partial cross-sectional view of a corresponding large-capacity battery during secondary sealing by glue injection according to Embodiment 24;
FIG. 72 is a schematic structural diagram of a glue injection mold according to Embodiment 25;
FIG. 73 is a schematic structural diagram of a first semi-annular adhesive retaining plate according to Embodiment 25; and
FIG. 74 is a schematic structural diagram of a large-capacity battery provided with a glue injection mold according to Embodiment 25.

Reference numerals in the drawings are as follows: 01. Sub-pipe; 02. Intermediate connecting pipe; 03. Lower cover plate of single cell; 04. Electrode post terminal clearance hole; 5. Shell; 49. Top plate of shell; 513. Sealing connector; 514. Liquid cooling pipe; 131. First surface of sealing connector; 21. Single cell; 211. First end surface; 212. Side surface; 213. Second end surface; 08. Electrode post terminal of single cell; 53. Terminal post adapter; 25. Electrical connecting post; 11. Clamping portion; 533. Outer side surface of terminal post adapter; 34. Electrical connection component; 341. Vertical plate; 342. Horizontal plate; 343. First electrical connecting plate; 344. Second electrical connecting plate; 345. Third connecting plate; 346. Liquid cooling pipe clearance channel; 35. Bottom surface of terminal post adapter; 36. Top surface of terminal post adapter; 37. Side surface of terminal post adapter; 51. Electrolyte shared chamber; 96. Annular adhesive retaining protrusion; 713. Side plate of shell; 98. Top end of cylindrical body; 52. Gas chamber; 10. Insulating protective cover; 9101. Second sidewall; 102. Slit; 9103. First sidewall; 104. Insulating frame body; 1041. Long side frame; 1042. First surface; 1043. Adhesive retaining plate; 1044. Reinforcing rib; 105. Insulating cover plate; 106. Baffle plate; 107. Second insulating frame; 108. Insulating bottom plate; 1081. Electrical connecting post clearance hole; 1082. Partition plate; 109. Terminal post adapter accommodating cavity; 110. Annular adhesive retaining ring; 111. Annular groove; 9112. First partition plate; 9113. Second partition plate; 9114. Third partition plate; 9115. Fourth partition plate; 38. L-shaped electrical connecting plate; 39. Vertical connecting plate; 40. Horizontal connecting plate; 541. First pressure-bearing plate; 542. Second pressure-bearing plate; 121. First annular groove; 22. Terminal post adapter main body; 754. Second annular groove; 77. Annular gap; 78. Insulating sealing adhesive layer; 79. Elastic adhesive retaining ring; 791. First mating surface; 792. Second mating surface; 1012. Bottom plate of shell; 94. Gas shared chamber; 951. Stepped surface; 61. Inlet end; 62. Outlet end; 88. Through hole; 99. Electrical connector; 122. Housing of single cell; 50. Support member; 80. First insulating sealing adhesive layer; 3. Heat transfer pipe; 91. First pipe; 92. Second pipe; 93. Connecting pipe; 26. Through groove; 90. Second insulating sealing adhesive layer; 140. First electrical connector; 150. Second electrical connector; 17. Explosion vent pipe; 18. Explosion vent manifold; 182. Outlet end of explosion vent manifold; a. First gap; b. Second gap; c. Third gap; d. Fourth gap; e. Insulating sealing adhesive layer; f. Hollowed region;
42. Upper cover plate of single cell; 43. Blind hole; 44. Glue injection channel; 45. Glue injection mold; 46. Annular adhesive retaining plate; 47. Annular support plate; 48. First semi-annular adhesive retaining plate; 41. Second semi-annular adhesive retaining plate; 411. First plate; 412. Second plate; 413. Third plate; 414. Fourth plate; 415. First semi-annular support plate; 416. Second semi-annular support plate.

### Detailed Description of the Embodiments

To make the objects, features, and advantages described above of the present invention more apparent and understandable, a detailed description of the specific implementations of the present invention is provided below with reference to the drawings. It is apparent that the described embodiments are part of the embodiments of the present invention, rather than all of the embodiments. All other embodiments obtained by a person of ordinary skill in the art on the basis of the embodiments in the present invention without creative work shall fall within the scope of protection of the present invention.

The following description provides many specific details to facilitate a comprehensive understanding of the present invention. However, the present invention may be implemented in other ways not specifically described herein. A person skilled in the art may make similar modifications or extensions without departing from the scope of the present invention. Therefore, the present invention is not limited to the specific embodiments disclosed below.

In the description of the present invention, it is to be noted that the terms "top", "bottom", and the like refer to orientations or positional relationships on the basis of orientations or positional relationships shown in the drawings. These terms are used merely to simplify and facilitate the description of the present invention, and are not intended to indicate or imply that the referenced apparatuses or elements have a specific orientation or be constructed and operated in a specific orientation. Therefore, such terms cannot be construed as limitations of the present invention. In addition, the terms "first", "second", "third", "fourth", and the like are used solely for descriptive purposes are not to be construed as indicating or implying relative importance.

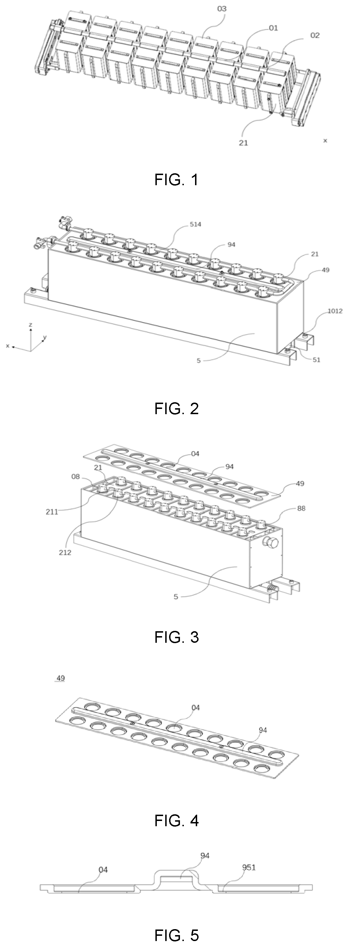

Embodiments 1 and 2 are a large-capacity battery. As shown in FIGS. 2 and 3, the large-capacity battery includes a shell 5 and a plurality of single cells 21. The plurality of single cells 21 are arranged and disposed within the shell 5 along the same direction. A shared chamber is disposed in the shell 5, an inner cavity of the shared chamber being in communication with inner cavities of all the single cells 21.

It is to be noted that the shared chamber above may be an electrolyte shared chamber 51 (as shown in FIG. 2). The electrolyte shared chamber 51 may ensure that the single cells 21 are within a uniform electrolyte environment, maintaining the uniformity of the electrolyte in the single cells 21. This enhances the performance and charge/discharge cycle life of the large-capacity battery. The shared chamber above may be a gas shared chamber 94 (as shown in FIG. 2). The gas shared chamber 94 may achieve gas balance of the single cells 21, thereby further enhancing the performance and charge/discharge cycle life of the large-capacity battery. The shared chamber above may be a gas-liquid shared chamber. A single gas-liquid shared chamber allows all single cells 21 to be within a uniform electrolyte and gas environment, thereby enhancing the performance and charge/discharge cycle life of the large-capacity battery.

To enhance the heat dissipation performance of such a large-capacity battery, electrode post terminal clearance holes 04 corresponding to the electrode post terminals of the single cells 21 are formed in the top plate 49 of the shell. The electrode post terminals 08 of the single cells extend through the corresponding electrode post terminal clearance holes 04. Regions of the top plate 49 of the shell corresponding to the electrode post terminal clearance holes 04 are fixedly sealed to a housing of the single cell 21, such that a gap between the electrode post terminal and the electrode post terminal clearance hole 04 is sealed.

A clamping portion of the liquid cooling pipe 514 is disposed at a part where each electrode post terminal 08 of the single cell extends through the corresponding electrode post terminal clearance hole 04. The liquid cooling pipe 514 main body is fixed to the clamping portion of the liquid cooling pipe 514, to achieve heat dissipation by a single-stage heat transfer method. During long-term use, due to the temperature difference between the interior and exterior of the liquid cooling pipe 514, condensation may form on the surface. When the condensation accumulates to a certain amount, it may seep into the gap between the electrode post terminal and the electrode post terminal clearance hole 04, causing electrical conductivity between the electrode post terminal and the shell 5. This may potentially lead to a short circuit in the same single cell 21.

In Embodiments 1 and 2, the problems above are overcome by optimizing a top structure of the large-capacity battery, wherein an insulating sealing adhesive layer 78 is laid on the top plate 49 of the shell. Electrical connection parts of the electrode post terminals 08 of the single cells extend through the insulating sealing adhesive layer 78 for connection to an electrical connector 99. An inlet end 61 and an outlet end 62 of the liquid cooling pipe 514 extend through the insulating sealing adhesive layer 78 for connection to a liquid cooling device. The electrical connector 99 may be a connecting device configured to realize a series connection between two large-capacity batteries; alternatively, it may be a connecting device configured to connect the large-capacity battery to an external load.

Embodiments 1 and 2 are further described below with reference to the drawings.

### Embodiment 1

Referring to FIGS. 2 and 3, the large-capacity battery according to this embodiment includes a shell 5 and ten single cells 21 arranged in parallel within the shell 5.

In this embodiment, the single cells 21 are commercially available prismatic batteries, with a total of ten cells. In other embodiments, the number may be adjusted according to actual needs. The inner cavity of each single cell 21 includes an electrolyte region and a gas region.

For convenience of description, the length direction of the shell 5 is defined as an x direction, the width direction of the shell 5 is defined as a y direction, and the height direction of the shell 5 is defined as a z direction. In the bottom plate 1012 of the shell, an electrolyte shared chamber 51 is disposed along the x direction. The inner cavity of the electrolyte shared chamber 51 is in communication with the electrolyte region of the inner cavity of each single cell 21. In the top plate 49 of the shell, a gas shared chamber 94 is disposed along the x direction. The inner cavity of the gas shared chamber 94 is in communication with the gas region of the inner cavity of each single cell 21.

In other embodiments, only the electrolyte shared chamber 51 or the gas shared chamber 94 may be disposed. Additionally, a gas-liquid shared chamber may be disposed along the x direction in the sidewall of the shell 5. The inner cavity of the gas-liquid shared chamber is in communication with the electrolyte region and the gas region of the inner cavity of each single cell 21.

As shown in FIG. 4, electrode post terminal clearance holes 04, which allow the electrode post terminals 08 of the single cells to extend through, are formed in a top plate of the shell 49. The electrode post terminals 08 of the single cells extend through the corresponding electrode post terminal clearance holes 04, and regions surrounding the electrode post terminal clearance holes 04 on the shell 5 are fixedly sealed to a housing of the single cell 21.

When the single cells 21 assembled as a group have substantially consistent dimensions in the z direction, a region of the top plate 49 of the shell corresponding to the electrode post terminal clearance holes 04 may be directly welded to a region of an upper cover plate surrounding the electrode post terminals 08 of the single cells to achieve sealing.

When the single cells 21 assembled as a group exhibit relatively large differences in dimensions in the z direction, the electrode post terminal clearance holes 04 may be configured as stepped holes, as shown in FIG. 5, with the stepped surface 951 welded to the housing of the single cells 21 to achieve sealing. For ease of sealing, protrusions are disposed on a surface of the top plate of the shell close to the single cells, and each protrusion is provided with stepped through holes penetrating the top plate of the shell and serving as the electrode post terminal clearance holes 04. Smaller holes of the stepped through holes are closer to the single cells, and hole depths of the smaller holes are less than hole depths of larger holes, such that the stepped surface 951 may more readily conform to the housing of the single cells 21.

With reference to FIG. 3, it can be seen that in this embodiment, a through hole 88 is formed at the part where the electrode post terminals 08 of the single cells extend through the electrode post terminal clearance holes 04, serving as a clamping portion of a liquid cooling pipe 514. As can be seen from FIG. 3, the electrode post terminals in this embodiment are cylindrical, including a first end surface 211, a second end surface, and a side surface 212 (the first end surface 211 being parallel to the second end surface). The through hole 88 is formed in the side surface 212 of the electrode post terminal, with the opening of the through hole 88 located in the side surface 212.

In other embodiments, a through groove may be formed in the side surface 212, with the opening of the through groove located in the side surface 212.

In other embodiments, a through groove may be formed in the first end surface 211, with the opening of the through groove located in the first end surface 211.

The first end surface 211 is configured for connection to an external electrical connector 99, and the second end surface is configured for electrical connection to the electrode assembly within the housing of the single cell 21.

Forming the through groove or through hole 88 in the side surface 212, as compared to forming a through groove in the first end surface 211, provides a larger contact area between the liquid cooling pipe 514 and the inner wall of the through groove or the through hole 88 within the through groove or the through hole 88, thereby achieving higher heat transfer efficiency. In addition, when the through groove or the through hole 88 is formed in the side surface 212, the entire region of the first end surface 211 may be used as an electrical connection region. Two through grooves or through holes 88 may also be disposed simultaneously in the side surface 212 of the electrode post terminal to increase the number of liquid cooling pipes 514, further enhancing heat transfer efficiency. Compared to the structure of the through hole 88, the through groove structure facilitates easier mounting of the liquid cooling pipe 514.

The cross-section of the through groove is C-shaped. A C-shaped through groove, with the opening width smaller than the widest part of the through groove, allows the liquid cooling pipe 514 to fit tightly within the through groove. The curvature formed at the two ends of the C-shaped through groove naturally generates tension, which is conducive to securely clamping the liquid cooling pipe 514 into the through groove.

The liquid cooling pipe 514 is fixed in the through groove or the through hole 88. When the temperature of the large-capacity battery exceeds a set threshold, a heat transfer medium with a lower temperature is introduced into the liquid cooling pipe 514 to cool the large-capacity battery. Conversely, when the temperature of the large-capacity battery falls below the set threshold, a heat transfer medium with a higher temperature is introduced into the liquid cooling pipe 514 to heat the large-capacity battery. By controlling the temperature of the heat transfer medium, it ensures that the large-capacity battery always operates within the normal working temperature.

As shown in FIG. 2, in this embodiment, the liquid cooling pipe 514 may be configured as a U-shaped pipe segment, with the two parallel pipe segments of the U-shaped pipe segment clamped in clamping portions of the liquid cooling pipe 514 of the positive electrode post terminal and the negative electrode post terminal of each single cell 21 in the large-capacity battery, respectively.

In other embodiments, two liquid cooling pipes 514 may be provided, the two liquid cooling pipes 514 being clamped in clamping portions of the liquid cooling pipe 514 of the positive electrode post terminal and the negative electrode post terminal of the single cells 21 in the large-capacity battery, respectively.

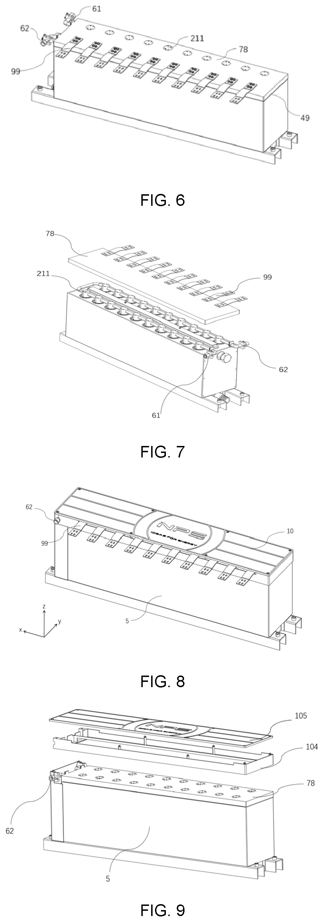

To prevent condensation from the liquid cooling pipes 514 from causing safety problems, in this embodiment, an insulating sealing adhesive layer 78 is laid on the top plate 49 of the shell, as shown in FIG. 6. As can be seen from the drawing, part of the region of the electrode post terminal 08 of each single cell is covered by the insulating sealing adhesive layer 78. The electrical connection parts (i.e., first end surface 211) of the electrode post terminal 08 of each single cell extend through the insulating sealing adhesive layer 78 and are connected to the electrical connector 99. The main body part of the liquid cooling pipe 514 is covered by the insulating sealing adhesive layer 78, while the inlet end 61 and the outlet end 62 of the liquid cooling pipe 514 extend through the insulating sealing adhesive layer 78 to connect to the liquid cooling device.

In other embodiments, the dimension of the insulating sealing adhesive layer 78 in the z direction may be smaller, below the main body part of the liquid cooling pipe 514, or may cover only part of the main body part of the liquid cooling pipe 514. The key point is to ensure that condensation cannot enter the gap between the electrode post terminal and the electrode post terminal clearance hole 04.

The insulating sealing adhesive used in this embodiment is typically a battery potting adhesive commonly used in batteries. For example, organic silicone thermally conductive potting adhesive may be used, which has good sealing, insulation, vibration resistance, heat dissipation, and waterproof functions.

To prevent the insulating sealing adhesive from overflowing, this embodiment also incorporates a glue injection mold around the edges of the top plate 49 of the shell during the glue injection process, ensuring that the insulating adhesive liquid may be smoothly injected. After the glue injection is completed, removal may be carried out.

### Embodiment 2

In the embodiment above, the electrode post terminal is directly exposed to the external environment, which presents a significant safety hazard due to the electrified state of the electrode post terminal during operation. On the basis of this, as shown in FIG. 8, in this embodiment on the basis of the embodiments above, an insulating protective cover 10 is disposed on the top of the large-capacity battery, providing insulation protection for the electrode post terminal. This avoids potential safety hazards caused by exposure of the electrode post terminal during operation of the large-capacity battery, and further avoids foreign objects from the exterior environment from falling into the electrode post terminal positions and causing short-circuiting of the large-capacity battery, thereby enhancing the safety of the large-capacity battery.

It is to be noted that if the insulating protective cover 10 completely encloses the electrode post terminal, it would make electrical connections of such a large-capacity battery more difficult. Therefore, in this embodiment, a slit is formed in the sidewall of the insulating protective cover 10, which is parallel to the xz plane. This slit allows the electrical connector 99 to connect to the electrode post terminal, thus achieving an electrical connection.

It is further to be noted that there is a need to form a channel on the sidewall of the insulating protective cover 10 for the inlet end 61 and the outlet end 62 of the liquid cooling pipe 514 to extend through.

To facilitate the electrical connection process, this embodiment designs the insulating protective cover 10 as a modular structure, as shown in FIG. 9. The structure includes an insulating frame body 104 and an insulating cover plate 105 that covers the insulating frame body 104. The lower end of the insulating frame body 104 is used to fit with the top of the large-capacity battery and is fixed to the top of the large-capacity battery by screws, adhesive, or other methods. The upper end of the insulating frame body 104 is fitted with the insulating cover plate 105. A notch is formed on the upper sidewall of the insulating frame body 104, which is parallel to the xz plane. The notch, when combined with the insulating cover plate 105, forms the slit above.

During assembly, the insulating frame body 104 may be fixed to the top of the large-capacity battery first. After that, the electrical connector 99 is connected to the electrode post terminal via the slit. After the glue injection, the insulating cover plate 105 is fixed to the upper end of the insulating frame body 104.

In addition, in Embodiment 1, during the glue injection process, to prevent the insulating sealing adhesive from overflowing, a glue injection mold is required. However, after the glue injection, the mold needs to be removed, making the process more complicated. Furthermore, during the removal process, there is a possibility of damaging the structure of the insulating sealing adhesive layer 78, which could reduce the sealing reliability.

However, in this embodiment, the insulating frame body 104 of the insulating protective cover 10 may be used as the glue injection mold. After the glue injection, no mold removal is required, and this approach also enhances the bonding strength between the insulating frame body 104 and the top of the large-capacity battery.

Embodiments 3 to 12 disclose a large-capacity battery that differs from the embodiments above.

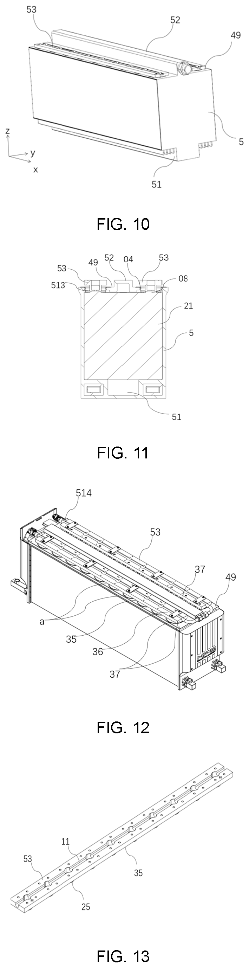

To solve the problems described in the Background, the related art proposes a large-capacity battery similar to Embodiments 1 and 2. As shown in FIGS. 10 and 11, the large-capacity battery includes a shell 5 and a plurality of single cells 21. The plurality of single cells 21 are arranged in parallel within the shell 5, and electrode post terminal clearance holes 04 corresponding to the electrode post terminals of the single cells 21 are formed in the top plate of the shell 5.

Different from Embodiments 1 and 2, this technology further includes terminal post adapters 53, with the electrode post terminals of the single cells 21 connected to the terminal post adapters 53 via the electrode post terminal clearance holes 04. The regions of the shell 5 corresponding to the electrode post terminal clearance holes 04 are fixedly sealed to the housings of the single cells 21.

As shown in FIG. 11, a sealing connector 513 may generally be disposed between the electrode post terminal clearance hole 04 and the upper cover plate of the single cell 21 to achieve sealing. The sealing connector 513 includes a hollow component, the bottom of the hollow component is configured for sealing connection to a first region of the single cell 21, and the top of the hollow component is configured for sealing connection to a second region of the shell 5. The first region is the region surrounding any electrode post terminal on the upper cover plate of any single cell 21, and the second region is the region on the shell 5 corresponding to any electrode post terminal clearance hole 04. The region corresponding to the electrode post terminal clearance hole 04 is the region on the outer surface of the shell 5 surrounding any electrode post terminal clearance hole 04, or the region corresponding to the electrode post terminal clearance hole 04 is the wall of the electrode post terminal clearance hole 04. The region surrounding the electrode post terminal is the region surrounding an insulating sealing gasket on the electrode post terminal. The insulating sealing gasket is a component on the single cell 21 configured to insulate the electrode post terminal from the upper cover plate. When the single cells 21 assembled as a group have substantially consistent dimensions in the z direction, a region of the shell 5 corresponding to the electrode post terminal clearance holes 04 may be directly welded to a region of an upper cover plate surrounding the electrode post terminals of the single cells 21 to achieve sealing. When the single cells 21 assembled as a group have substantially consistent dimensions in the z direction, a region of the shell 5 corresponding to the electrode post terminal clearance holes 04 may be directly welded to a region of an upper cover plate surrounding the electrode post terminals of the single cells 21 to achieve sealing.

An electrolyte shared chamber 51 is disposed in the bottom plate of the shell 5. The electrolyte shared chamber 51 is in communication with the electrolyte regions of the inner cavities of the single cells 21. The electrolyte shared chamber 51 may ensure that the single cells 21 are in a uniform electrolyte environment, maintaining the uniformity of the electrolyte in each single cell 21. This enhances the performance and the cycle life of the large-capacity battery.

A gas chamber 52 may be disposed in the top plate of the shell 5. The gas chamber 52 may be in communication with the gas regions of the inner cavities of the single cells 21 to achieve gas balance of the single cells 21, thereby further enhancing the performance and cycle life of the large-capacity battery. The gas chamber 52 may also serve as an explosion vent channel. When any single cell 21 undergoes thermal runaway, the thermal runaway gases generated in the inner cavity of the single cell 21 enter the gas chamber 52 and rupture the explosion vent mechanism disposed on either end of the gas chamber 52, allowing the gases to be discharged.

During operation, the large-capacity batteries above generate heat. If heat dissipation is not performed in a timely manner, the service life of the batteries may be substantially shortened, energy loss may be aggravated, and safety hazards such as spontaneous combustion and fire may even occur. Therefore, to enhance the heat dissipation efficiency of the large-capacity battery, a liquid cooling pipe may be fixed to the terminal post adapter 53 to facilitate heat dissipation.

However, during prolonged use, due to the temperature difference between the interior and exterior of the liquid cooling pipe, condensation may form on the surface. When this condensation accumulates to a certain extent, it may infiltrate the gap between the terminal post adapter 53 and the top plate of the shell 5. If a sealing connector 513 is disposed, the condensation may further seep into the space between the sealing connector 513 and the electrode post terminal or the terminal post adapter 53, potentially causing electrical conduction between the terminal post adapter 53 and the shell 5, which could in turn lead to a short circuit within the same single cell 21.

On the basis of this, Embodiments 3 to 12 disclose a large-capacity battery that not only overcomes the problem of the assembly difficulties associated with the shared piping assemblies of conventional large-capacity batteries, but also prevents condensation from entering the large-capacity battery and causing internal circuit short circuits or damage.

The following is described in detail with reference to FIGS. 12 to 37.

The electrical connector in Embodiments 3 to 12 may be a connecting device configured to realize a series connection between two large-capacity batteries; alternatively, it may be a connecting device configured to connect the large-capacity battery to an external load.

### Embodiment 3

The structure of the large-capacity battery in this embodiment is shown in FIGS. 12 to 14. The large-capacity battery includes a shell 5, a plurality of single cells 21, and two terminal post adapters 53. The plurality of single cells 21 are arranged in parallel within the shell 5. An electrolyte shared chamber 51 is disposed in the bottom plate of the shell 5, and the electrolyte shared chamber 51 is in communication with electrolyte regions of the inner cavities of the single cells 21.

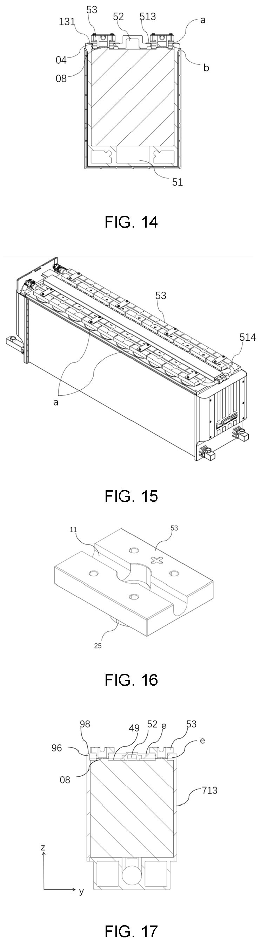

Referring to FIG. 14, electrode post terminal clearance holes 04 corresponding to the electrode post terminals 08 of the single cells are formed in the top plate 49 of the shell. The electrode post terminals 08 of the single cells are connected to the terminal post adapters 53 via the electrode post terminal clearance holes 04. A sealing connector 513 is disposed in the electrode post terminal clearance holes 04 to achieve fixed sealing between the regions of the shell 5 corresponding to the electrode post terminal clearance holes 04 and the housings of the single cells 21. The structure and mounting position of the sealing connector 513 are the same as those in the large-capacity battery described in the related art described above.

As shown in FIG. 13, the terminal post adapter 53 in this embodiment is an elongated component. Two such elongated components are connected to a positive pole and a negative pole of all the single cells 21, respectively, serving as the positive terminal and the negative terminal of the large-capacity battery.

A plurality of electrical connecting posts 25 are disposed on the elongated component. The electrical connecting posts 25 are projecting portions projecting from the elongated component. Each electrical connecting post 25 is configured to connect to the positive electrode post terminal or the negative electrode post terminal of all the single cells 21 in the large-capacity battery. Blind holes may be formed in the elongated component, each corresponding to an electrical connecting post 25 and extending into the electrical connecting post 25. A conductive post is disposed in each blind hole, and the outer wall of the conductive post is in close contact with the inner wall of the blind hole to enhance the electrical conductivity of the terminal post adapter 53.

In this embodiment, a clamping portion 11 for mounting the liquid cooling pipe 514 is disposed on the elongated component. After the large-capacity battery is fully assembled, the liquid cooling pipe 514 is mounted in the clamping portion 11 of the terminal post adapter 53. Heat concentrated at the electrode post terminals may be transferred from the terminal post adapter 53 to the liquid cooling pipe 514 and dissipated. Similarly, when the ambient temperature is too low for the single cells 21 to start normally, an external temperature control apparatus may also use the liquid cooling pipe 514 to heat the single cells 21.

To prevent condensation from the liquid cooling pipe 514 from seeping into the first gap between the bottom surface 35 of the terminal post adapter and the top plate 49 of the shell, or between the bottom surface 35 of the terminal post adapter and the first surface 131 of the sealing connector (region a shown in FIGS. 12 and 14), or into the second gap between the electrical connecting posts 25 of the terminal post adapter 53 or the electrode post terminals 08 of the single cells and the sealing connector 513 (region b shown in FIG. 14), insulating sealing adhesive is filled in region a in this embodiment. In particular, the adhesive may be directly injected into region a using a glue injection process. During glue injection, under the influence of gravity, the insulating sealing adhesive inevitably flows into region b. In other words, in this embodiment, both region a and region b are filled with insulating sealing adhesive. To reduce the amount of insulating sealing adhesive and simultaneously prevent the problem of potential failure of the electrical connection due to poor soldering between the electrical connecting posts 25 and the electrode post terminals 08 of the single cells, caused by the insulating sealing adhesive flowing into the poor soldering parts between the electrical connecting posts 25 and the electrode post terminals 08 of the single cells, the adhesive may, where conditions permit, be injected only into region a. For example, an insulating partition plate may be disposed at the junction between regions a and b, so that during injection into region a, the insulating sealing adhesive is prevented from entering region b. Alternatively, solid insulation material may be filled in region b first, followed by injection of adhesive into region a. This also prevents the insulating sealing adhesive from flowing into region b.

To prevent overflow of the insulating sealing adhesive, in this embodiment, glue injection molds may be disposed on the top plate 49 of the shell and on two sides of the terminal post adapter 53 during the glue injection process, ensuring that the insulating sealing adhesive may be smoothly injected into region a. After the glue injection is completed, removal may be carried out.

The insulating sealing adhesive used in this embodiment is typically a battery potting adhesive commonly used in batteries. For example, organic silicone thermally conductive potting adhesive may be used, which has good sealing, insulation, vibration resistance, heat dissipation, and waterproof functions.

### Embodiment 4

Different from Embodiment 3, as shown in FIG. 15, this embodiment includes a plurality of terminal post adapters 53, each terminal post adapter 53 configured as a rectangular block. A terminal post adapter 53 is connected to a positive electrode post terminal and a negative electrode post terminal of each single cell 21.

As shown in FIG. 16, in this embodiment, electrical connecting posts 25 are disposed on the rectangular block. The electrical connecting posts 25 are projecting portions projecting from the rectangular block. The electrical connecting posts 25 of the terminal post adapter 53 extend into the electrode post terminal clearance holes 04 to connect to the electrode post terminals 08 of the single cells located in the inner cavity of the shell 5.

The glue injection positions in this embodiment are the same as those in Embodiment 3 and are not repeated here.

### Embodiment 5

Different from the embodiments above, in this embodiment, no glue injection molds are required during the glue injection process. Instead, part structures of the shell 5 of the large-capacity battery serve as the glue injection mold, ensuring that the insulating sealing adhesive may be smoothly injected into region a.

The specific structure is shown in FIG. 17. In FIG. 17, the top plate 49 of the shell and the side plates 713 of the shell (including two side plates parallel to the yz plane and two side plates parallel to the xz plane) are a modular structure. The regions of the shell 5 corresponding to the electrode post terminal clearance holes 04 are welded to the upper cover plate areas surrounding the electrode post terminals 08 of the single cells to achieve sealing.

As can be seen from FIG. 17, an annular adhesive retaining protrusion 96 is disposed along a circumferential direction of the top plate 49 of the shell. This protrusion serves as a glue injection mold, preventing the insulating sealing adhesive from overflowing from the top plate 49 of the shell during the glue injection process.

The annular adhesive retaining protrusion 96 may be integrally formed with the top plate 49 of the shell or with the cylindrical body. The cylindrical body described here has both its top end and bottom end open and is formed by two side plates parallel to the yz plane and two side plates parallel to the xz plane. As shown in FIG. 17, in this embodiment, the top plate 49 of the shell of the large-capacity battery is fixed to the inner wall of the cylindrical body and spaced a distance from the top end 98 of the cylindrical body. That is, a glue injection space is formed between the top plate 49 of the shell and the sidewalls of the cylindrical body that extend through the top plate 49 of the shell. Insulating sealing adhesive is directly injected into this glue injection space, filling region a, as indicated by e in FIG. 17, forming an insulating sealing adhesive layer. Moreover, the sidewalls of the cylindrical body that extend through the top plate of the cylindrical body serve as a glue injection mold, preventing the insulating sealing adhesive from overflowing.

It is to be noted that if a gas chamber 52 is not disposed in the top plate 49 of the shell, openings corresponding to the explosion vent ports of the single cells 21 may be formed in the top plate 49 of the shell, with the regions surrounding these openings sealed to the upper cover plates of the single cells 21. During glue injection, an adhesive retaining structure may be disposed above the explosion vent ports of the single cells 21 to prevent the insulating sealing adhesive from covering the explosion vent ports and creating safety hazards. Once glue injection is complete, the adhesive retaining structure may be removed. If a gas chamber 52 is not disposed in the top plate 49 of the shell, openings corresponding to the explosion vent ports of the single cells 21 may also be omitted. In this case, one end of the electrolyte shared chamber may serve directly as the explosion vent port for pressure relief.

When a gas chamber 52 is disposed in the top plate 49 of the shell, the gas chamber 52 may serve as the adhesive retaining structure, as shown in FIG. 17.

### Embodiment 6

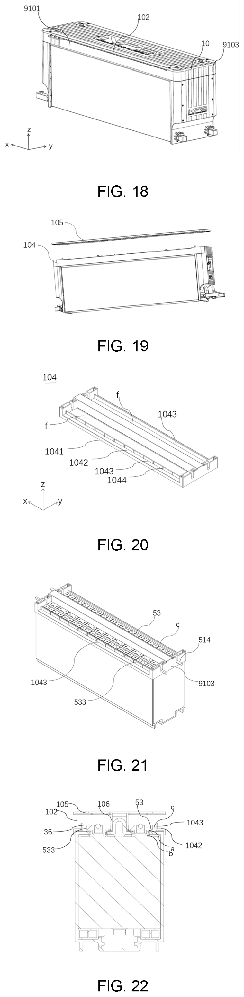

In the embodiments above, the terminal post adapter 53 is directly exposed to the external environment, which presents a significant safety hazard due to the electrified state of the terminal post adapter 53 during operation. On the basis of this, as shown in FIG. 18, in this embodiment on the basis of the embodiments above, an insulating protective cover 10 is disposed on the top of the large-capacity battery, providing insulation protection for the terminal post adapter 53. This avoids potential safety hazards caused by exposure of the terminal post adapter 53 during operation of the large-capacity battery, and further avoids foreign objects from the exterior environment from falling into the positions of the terminal post adapter 53 and causing short-circuiting of the large-capacity battery, thereby enhancing the safety of the large-capacity battery.

It is to be noted that if the insulating protective cover 10 completely encloses the terminal post adapter 53, it would make electrical connections of such a large-capacity battery more difficult. Therefore, in this embodiment, a slit 102 is formed in the sidewall (defined as a second sidewall 9101) of the insulating protective cover 10, which is parallel to the xz plane. This slit 102 allows the electrical connector to connect to the terminal post adapter 53, thus achieving an electrical connection.

It is also to be noted that a channel for the liquid cooling pipe 514 to extend through needs to be formed in the sidewall of the insulating protective cover 10 that is parallel to the yz plane (defined as the first sidewall 9103) (not shown in the drawing).

To facilitate the electrical connection process, this embodiment designs the insulating protective cover 10 as a modular structure, as shown in FIG. 19. The structure includes an insulating frame body 104 and an insulating cover plate 105 that covers the insulating frame body 104. The lower end of the insulating frame body 104 is used to fit with the top of the large-capacity battery and is fixed to the top of the large-capacity battery by screws, adhesive, or other methods. The upper end of the insulating frame body 104 is fitted with the insulating cover plate 105. A notch is formed on the upper sidewall of the insulating frame body 104, which is parallel to the xz plane. The notch, when combined with the insulating cover plate 105, forms the slit 102 above.

During assembly, the insulating frame body 104 may be fixed to the top of the large-capacity battery first. After that, the electrical connector is connected to the terminal post adapter 53 via the slit 102. After the glue injection, the insulating cover plate 105 is fixed to the upper end of the insulating frame body 104.

### Embodiment 7

In Embodiments 3 and 4 described above, during the glue injection process, to prevent the insulating sealing adhesive from overflowing, a glue injection mold is required. However, after the glue injection, the mold needs to be removed, making the process more complicated. Furthermore, during the removal process, there is a possibility of damaging the structure of the insulating sealing adhesive layer filled in the region a, which could reduce the sealing reliability.

On the basis of this, the inventors considered that the insulating frame body 104 of the insulating protective cover 10 in Embodiment 6 may be used as the glue injection mold. After the glue injection, no mold removal is required, and this approach also enhances the bonding strength between the insulating frame body 104 and the top of the large-capacity battery.

Therefore, in this embodiment, the structure of the insulating frame body 104 is optimized so that, while serving as an insulating protective housing, it may also function as a glue injection mold. Its structure is shown in FIGS. 20 and 21.

In this embodiment, the insulating frame body 104 includes a first insulating frame. Adhesive retaining plates 1043 are disposed on the first surfaces 1042 (surfaces parallel to the xy plane) of the two long side frames 1041 of the first insulating frame. The adhesive retaining plates 1043 extend along the x direction and, in the y direction, form a third gap with the outer side surfaces 533 of the terminal post adapters (region c shown in FIG. 21). To enhance the strength of the adhesive retaining plates 1043, reinforcing ribs 1044 may be disposed on the adhesive retaining plates 1043.

It is to be noted that the f region shown in FIG. 20 is a hollowed region. After assembly, the terminal post adapter 53 is located within this region, as shown in FIGS. 21 and 22.

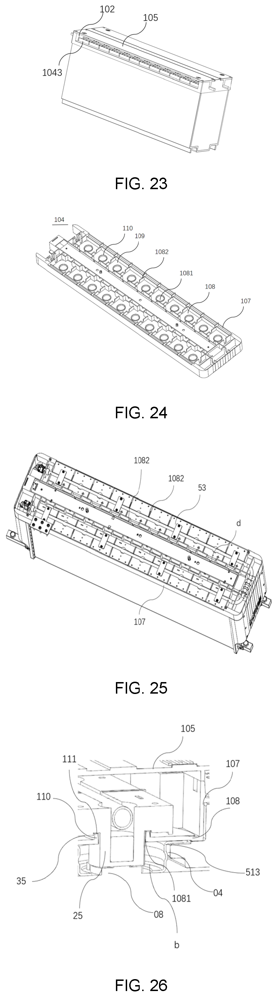

It is also to be noted that a slit 102 needs to be formed between the adhesive retaining plate 1043 and the insulating cover plate 105 to allow the electrical connector to connect to the terminal post adapter 53, as shown in FIGS. 22 and 23. When the upper end of the adhesive retaining plate 1043 is higher than the top surface 36 of the terminal post adapter, a bent-structure electrical connector may be used to connect to the terminal post adapter. When the upper end of the adhesive retaining plate 1043 is lower than the top surface 36 of the terminal post adapter, a flat electrical connector may be used for the connection. However, it is to be noted that the glue injection height needs to be lower than both the top surface 36 of the terminal post adapter and the upper end surface of the adhesive retaining plate 1043.

It is also to be noted that if a gas chamber 52 is not disposed in the top plate 49 of the shell, an adhesive retaining structure may be disposed above the explosion vent ports of the single cells 21 to prevent the insulating sealing adhesive from covering the explosion vent ports and creating safety hazards. Once glue injection is complete, the adhesive retaining structure may be removed. In addition, when a gas chamber 52 is disposed in the top plate 49 of the shell, the gas chamber 52 may serve as the adhesive retaining structure. Certainly, for structural neatness, as shown in FIG. 22, baffle plates 106 parallel to the xz plane may be disposed on two sides of the gas chamber 52. The top ends are flush with the insulating cover plate 105, or they may be integrally formed with the insulating cover plate 105.

After the insulating frame body 104 is fixed to the top of the large-capacity battery, the adhesive is injected into the third gap between the insulating frame body 104 and the terminal post adapter 53. The insulating sealing adhesive fills the third gap between the insulating frame body 104 and the terminal post adapter 53 (region c), as well as the region a and the region b.

### Embodiment 8

Different from Embodiment 7, in this embodiment, the insulating frame body 104 has the following structural features:
In this embodiment, the insulating frame body 104 includes a second insulating frame 107 and an insulating bottom plate 108 fixed to the second insulating frame 107 away from the insulating cover plate. Electrical connecting post clearance holes 1081 corresponding to the terminal post adapters 53 are formed in the insulating bottom plate 108. The size of each electrical connecting post clearance hole 1081 shall allow the electrical connecting posts 25 on the terminal post adapter 53 to pass through, while preventing the main body portion of the terminal post adapter 53 from passing.

As shown in FIGS. 24, 25, and 26, for the terminal post adapter 53 of Embodiment 4, partition plates 1082 may be disposed around each electrical connecting post clearance hole 1081 to form a terminal post adapter accommodating cavity 109. After the insulating frame body 104 is fixed to the top of the large-capacity battery, the electrical connecting posts 25 of each terminal post adapter 53 pass through the electrical connecting post clearance holes 1081 and the electrode post terminal clearance holes 04 in the top plate 49 of the shell to connect to the electrode post terminals 08 of the single cells. The terminal post adapter accommodating cavity 109 has a fourth gap with the sidewalls parallel to the xz plane and the side surfaces of the terminal post adapter 53 parallel to the xz plane (region d shown in FIG. 25). The adhesive is injected into the glue injection space via the fourth gap, thereby providing insulating sealing for regions a and b.

For the terminal post adapter 53 of Embodiment 5, no partition plates 1082 are required. The accommodating cavity of the terminal post adapter 53 is a rectangular chamber, and the space between the terminal post adapter 53 and the terminal post adapter accommodating cavity 109 forms the glue injection space.

When the diameter of the electrical connecting post clearance hole 1081 is larger than the outer diameter of the electrical connecting post 25 of the terminal post adapter 53, the insulating sealing adhesive may flow through the gap between the two into the region b. If poor soldering exists between the electrical connecting post 25 of the terminal post adapter 53 and the electrode post terminals 08 of the single cells, the insulating sealing adhesive entering the region b may infiltrate the poor soldering part, potentially affecting the conductivity between the terminal post adapter 53 and the electrode post terminals 08 of the single cell. To avoid such problems while also reducing adhesive usage, an annular adhesive retaining ring 110 may be disposed at the outer edge of the electrical connecting post clearance hole 1081, avoiding the insulating sealing adhesive from flowing into the region b, as shown in FIGS. 24 and 26. It is to be noted that the outer edge of the electrical connecting post clearance hole 1081 may be either the wall of the electrical connecting post clearance hole 1081 or the bottom plate region of the glue injection space surrounding the electrical connecting post clearance hole 1081. As can be seen from the drawings, the annular adhesive retaining ring 110 projects from the bottom plate of the terminal post adapter accommodating cavity 109 toward the insulating cover plate 105, perpendicular to the bottom plate of the terminal post adapter accommodating cavity. Moreover, to cooperate with the annular adhesive retaining ring 110, an annular groove 111 is formed in the bottom surface 35 of the terminal post adapter, and the annular adhesive retaining ring 110 may be directly inserted into the annular groove 111.

### Embodiment 9

To further enhance the insulation and sealing performance at the top of the large-capacity battery, in this embodiment, an insulating sealing adhesive is filled over the entire terminal post adapter 53 of the large-capacity battery.

The following two problems need to be particularly considered:
1. The electrical connection of the terminal post adapter 53;
2. Adhesive overflow on the surface of the terminal post adapter 53 during the glue injection process.

Regarding problem 1, it may be solved as follows:
By optimizing the structure of the terminal post adapter 53, an electrical connecting component 34 is disposed on the terminal post adapter 53, and adhesive is prevented from being injected into the electrical connecting component 34, thereby enabling connection to the electrical connector.

Regarding problem 2, it may be solved as follows:
An adhesive retaining structure is disposed on the terminal post adapter 53, which may be formed as part of the electrical connecting component 34.

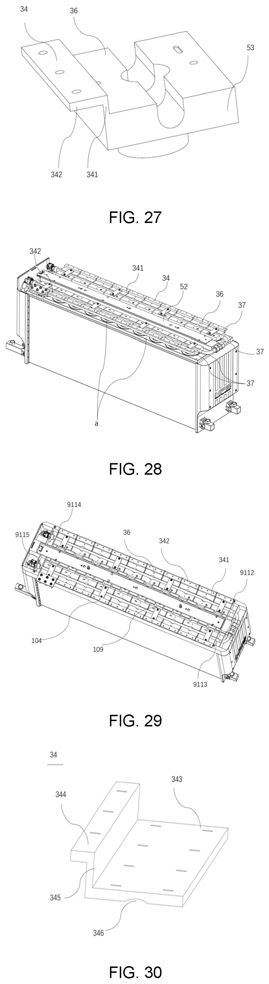

On the basis of the analysis above, this embodiment provides the following improvements to the terminal post adapter 53:
Taking the terminal post adapter 53 of Embodiment 4 as an example, its structure is shown in FIG. 27. The electrical connecting component 34 and the terminal post adapter 53 are of an integral structure. The electrical connecting component 34 has an inverted L-shaped plate, and in the x direction, the dimension of the electrical connecting component is equal to that of the terminal post adapter. The vertical plate 341 of the inverted L-shaped plate is fixed to the top surface 36 of the terminal post adapter, while the horizontal plate 342 is parallel to the xy plane and is configured for connection to the electrical connector.

As shown in FIG. 28, adhesive may be directly injected into the terminal post adapter, such that the insulating sealing adhesive fully encapsulates the entire terminal post adapter. That is, an insulating sealing adhesive layer thicker than the terminal post adapter (dimension in the z direction) is laid on the top plate 49 of the shell, such that the insulating sealing adhesive layer completely covers the terminal post adapter. Alternatively, this may be understood as providing an insulating sealing adhesive layer not only in the first gap (region a) between the bottom surface 35 of the terminal post adapter and the top plate 49 of the shell, but also on the top surface 36 of the terminal post adapter and side surfaces 37 of the terminal post adapter. The first surface is a surface of the terminal post adapter that is parallel to and close to the top plate 49 of the shell, the second surface is a surface of the terminal post adapter that is parallel to but away from the top plate 49 of the shell, and the side surfaces are surfaces of the terminal post adapter that are perpendicular to both the first surface and the second surface.

It is to be noted that during the glue injection process, the horizontal plate 342 of the electrical connecting component 34 needs to extend through the insulating sealing adhesive layer, that is, no insulating sealing adhesive is applied to the horizontal plate 342.

It is also to be noted that if a gas chamber 52 is not disposed in the top plate 49 of the shell, openings corresponding to the explosion vent ports of the single cells 21 may be formed in the top plate 49 of the shell, with the regions surrounding these openings sealed to the upper cover plates of the single cells 21. During glue injection, an adhesive retaining structure may be disposed above the explosion vent ports of the single cells 21 to prevent the insulating sealing adhesive from covering the explosion vent ports and creating safety hazards. Once glue injection is complete, the adhesive retaining structure may be removed. In addition, when a gas chamber 52 is disposed in the top plate 49 of the shell, the gas chamber 52 may serve as the adhesive retaining structure. During the glue injection process, the vertical plate 341 of the electrical connecting component 34 and the gas chamber prevent the insulating sealing adhesive from overflowing from the edges of the terminal post adapter 53 that are parallel to the x direction. However, overflow may still occur from the edges parallel to the y direction. Therefore, a glue injection mold is disposed to prevent the insulating sealing adhesive from overflowing from the edges parallel to the y direction. The glue injection mold is removed upon completion of the glue injection.

When the insulating protective cover is fixed on the top of the large-capacity battery, taking the insulating frame body 104 of Embodiment 8 as an example, as shown in FIG. 29, the four outermost partition plates on the insulating bottom plate (which may be defined as the first partition plate 9112, the second partition plate 9113, the third partition plate 9114, and the fourth partition plate 9115) are slightly higher than the height of the terminal post adapter. When the terminal post adapter 53 above is fixed in the terminal post adapter accommodating cavity 109, the horizontal plate 342 of the electrical connecting component 34 is located in the notch of the insulating frame body 104, thereby enabling improved electrical connection to the electrical connector.

In this embodiment, insulating sealing adhesive is filled both on the top surface 36 of the terminal post adapter and within the glue injection space. The vertical plate 341 of the electrical connecting component 34 and the outermost partition plates prevent the insulating sealing adhesive from overflowing from the second surface of the terminal post adapter 53. Moreover, the horizontal plate 342 serves as the electrical connection part. Since the horizontal plate 342 extends above the top surface 36 of the terminal post adapter in the z direction, the insulating sealing adhesive does not cover the horizontal plate 342, thereby ensuring that the conductivity of the terminal post adapter 53 is not affected.

### Embodiment 10

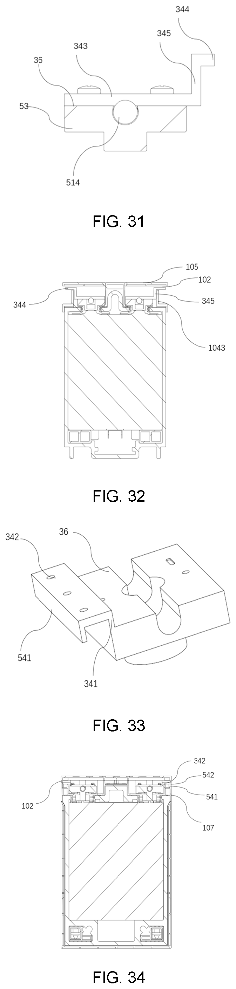

Different from Embodiment 9, in this embodiment, the electrical connecting component 34 and the terminal post adapter 53 are modular members, and in the x direction, the dimensions of the electrical connecting component are equal to those of the terminal post adapter. The structure is as shown in FIGS. 30 and 31:
In this embodiment, the electrical connecting component 34 includes a first electrical connecting plate 343, a second electrical connecting plate 344, and a third connecting plate 345. The third connecting plate 345 is positioned between the first electrical connecting plate 343 and the second electrical connecting plate 344. The first electrical connecting plate 343 is fixed to the top surface 36 of the terminal post adapter, and a liquid cooling pipe clearance channel 346 is disposed in the surface where the first electrical connecting plate 343 mates with the terminal post adapter 53. Once the two are fixed, the first electrical connecting plate 343 may also serve to clamp the liquid cooling pipe 514. The second electrical connecting plate 344 is positioned at the notch of the insulating frame body 104 and is configured for connection to the electrical connector.

As shown in FIG. 32, taking an insulating protective cover as an example, specifically the insulating frame body 104 of Embodiment 7, when the terminal post adapter 53 with the attached electrical connecting component 34 described above is fixed to the electrode post terminals of the single cells, the second electrical connecting plate 344 of the electrical connecting component 34 is positioned at the slit 102, thereby enabling improved electrical connection to the electrical connector.

In this embodiment, insulating sealing adhesive is filled onto the terminal post adapter with the attached electrical connecting component. The third connecting plate 345 of the electrical connecting component 34 and the sidewalls of the insulating frame body 104, which are parallel to the yz plane, prevent the insulating sealing adhesive from overflowing from the surface of the first electrical connecting plate 343. Likewise, the adhesive retaining plate 1043 prevents the insulating sealing adhesive from overflowing from the top plate 49 of the shell. Moreover, the second electrical connecting plate 344 serves as the electrical connection part. Since the second electrical connecting plate 344 extends above the top surface 36 of the terminal post adapter in the z direction, the insulating sealing adhesive does not cover the second electrical connecting plate 344, thereby ensuring that the conductivity of the terminal post adapter 53 is not affected.

### Embodiment 11

Different from Embodiment 9, in this embodiment, a first pressure-bearing plate 541 is disposed on the terminal post adapter 53, and in the x direction, the dimensions of the first pressure-bearing plate are equal to those of the terminal post adapter.

Moreover, the structure of the insulating frame body 104 is also improved by disposing a second pressure-bearing plate 542 configured to correspond to the first pressure-bearing plate 541.

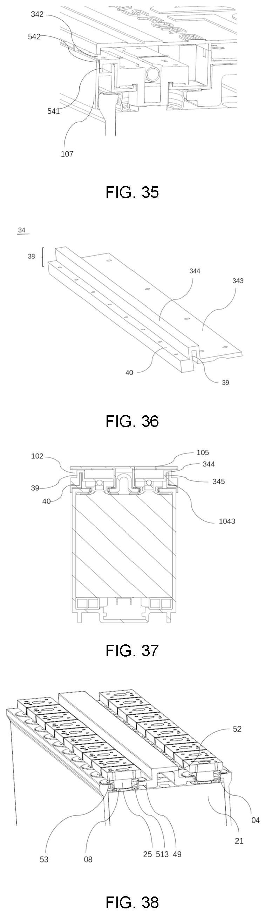

The specific structure is shown in FIGS. 33 to 35. As can be seen from FIG. 33, in this embodiment, a first pressure-bearing plate 541 perpendicular to the horizontal plate 342 of the electrical connecting component 34 of the terminal post adapter 53 in Embodiment 9 is disposed therein. As can be seen from FIGS. 34 and 35, a second pressure-bearing plate 542, coplanar with the sidewall of the second insulating frame 107 parallel to the xz plane, is disposed thereon. The second pressure-bearing plate 542 may be integrally formed with the second insulating frame 107. Upon assembly, the first pressure-bearing plate 541 is in close contact with the second pressure-bearing plate 542, thereby enhancing the structural stability of the large-capacity battery.

### Embodiment 12

Different from Embodiment 10, in this embodiment, the structure of the electrical connecting component 34 is illustrated in FIG. 36.

On the basis of the electrical connecting component 34 of Embodiment 10, an L-shaped electrical connecting plate 38 is disposed, with the dimension of the L-shaped electrical connecting plate in the x direction equal to the dimension of the terminal post adapter. The vertical connecting plate 39 of the L-shaped electrical connecting plate 38 is connected to the second electrical connecting plate 344 of the electrical connecting component, while the horizontal connecting plate 40 is configured for connection to the electrical connector.

As shown in FIG. 37, taking an insulating protective cover as an example, specifically the insulating frame body 104 of Embodiment 7, when the terminal post adapter 53 with the attached electrical connecting component 34 of this embodiment is fixed to the electrode post terminals of the single cells, the horizontal connecting plate 40 of the electrical connecting component 34 is positioned at the slit 102. Compared to Embodiment 10, this configuration provides a larger electrical connection space, enabling improved electrical connection to the electrical connector.

Embodiments 13 to 18 provide a large-capacity battery that differs from the embodiments above.

To solve the problems described in the Background, the related art proposes a large-capacity battery. As shown in FIGS. 10, 11, and 38, the large-capacity battery includes a shell 5 and a plurality of single cells 21. The plurality of single cells 21 are arranged in parallel within the shell 5.

An electrolyte shared chamber 51 is disposed in the bottom plate of the shell 5. The electrolyte shared chamber 51 is in communication with the electrolyte regions of the inner cavities of the single cells 21. The electrolyte shared chamber 51 may ensure that the single cells 21 are in a uniform electrolyte environment, maintaining the uniformity of the electrolyte in each single cell 21. This enhances the performance and the cycle life of the large-capacity battery.

A gas chamber 52 may be disposed in the top plate 49 of the shell. The gas chamber 52 may be in communication with the gas regions of the inner cavities of the single cells 21 to achieve gas balance of the single cells 21, thereby further enhancing the performance and cycle life of the large-capacity battery. The gas chamber 52 may also serve as an explosion vent channel. When any single cell 21 undergoes thermal runaway, the thermal runaway gases generated in the inner cavity of the single cell 21 enter the gas chamber 52 and rupture the explosion vent mechanism disposed on either end of the gas chamber 52, allowing the gases to be discharged.

Electrode post terminal clearance holes 04 corresponding to the electrode post terminals 08 of the single cells 21 are formed in the top plate 49 of the shell. The electrode post terminals of the single cells are connected to the terminal post adapters 53 via the electrode post terminal clearance holes 04.

It is to be noted that the electrode post terminals 08 of the single cells may be connected to the terminal post adapter 53 via the electrode post terminal clearance holes 04 in the following methods:
Method 1: As shown in FIG. 10, the electrode post terminals 08 of the single cells extend through the electrode post terminal clearance holes 04 to connect to the terminal post adapter 53. In FIG. 38, the electrode post terminals of the single cells 21 extend through the corresponding electrode post terminal clearance holes 04, after which all the positive electrode post terminals and negative electrode post terminals are connected to the two elongated terminal post adapters 53 shown in FIG. 38, respectively. Each elongated terminal post adapter 53 serves as the positive terminal and the negative terminal of the large-capacity battery.

Method 2: As shown in FIGS. 11 and 38, a part of each terminal post adapter extends into the electrode post terminal clearance hole 04 to connect to the electrode post terminals 08 of the single cells. In FIG. 38, each terminal post adapter 53 is a rectangular block, with each positive electrode post terminal and negative electrode post terminal of the single cells 21 corresponding to one terminal post adapter 53. Each terminal post adapter 53 includes a terminal post adapter main body 22 and an electrical connecting post 25 fixed to the terminal post adapter main body 22 and projecting from the terminal post adapter main body 22. The electrical connecting posts 25 of the terminal post adapters 53 extend into the electrode post terminal clearance holes 04 to connect to the corresponding electrode post terminals 08 of the single cells 21. It is to be noted that the electrode post terminals 08 of the single cells 21 may either extend into the electrode post terminal clearance holes 04 or remain within the inner cavity of the shell without extending into the electrode post terminal clearance holes 04.

As can be seen from FIG. 38, an annular gap exists between the electrode post terminal clearance hole 04, the terminal post adapter, and the electrode post terminals of the single cells. To ensure that the shared chamber remains completely isolated from the external environment, the sealing of the shell 5 is of critical importance.

Therefore, the annular gap corresponding to each electrode post terminal clearance hole 04 on the shell 5 needs to be sealed to ensure proper sealing at that location. In general, the peripheral region corresponding to each electrode post terminal clearance hole 04 may be sealed by laser welding the shell 5 to the upper cover plate of the single cell 21, thereby ensuring sealing.

However, during mass production of the large-capacity battery, due to machining and assembly tolerances, ensuring that the bottoms of all single cells 21 lie on the same horizontal plane may cause the tops (i.e., upper cover plates) of the single cells 21 to be uneven. This may create gaps between the upper cover plates of certain single cells 21 and the shell 5 in some large-capacity batteries, potentially leading to poor soldering between the shell 5 and the upper cover plate during laser welding, or even making welding impossible, reducing the yield of the large-capacity battery.

To overcome the problem above, as shown in FIG. 38, a sealing connector 513 may be disposed between the electrode post terminal clearance hole 04 and the upper cover plate of the single cell 21 to achieve sealing. The sealing connector 513 includes a hollow component, the bottom of the hollow component is configured for sealing connection to a first region of the single cell 21, and the top of the hollow component is configured for sealing connection to a second region of the shell 5. The first region is the region surrounding any electrode post terminal on the upper cover plate of any single cell 21, and the second region is the region on the shell 5 corresponding to any electrode post terminal clearance hole 04. The region corresponding to the electrode post terminal clearance hole 04 is the region on the outer surface of the shell 5 surrounding any electrode post terminal clearance hole 04, or the region corresponding to the electrode post terminal clearance hole 04 is the wall of the electrode post terminal clearance hole 04. The region surrounding the electrode post terminal is the region surrounding an insulating sealing gasket on the electrode post terminal. The insulating sealing gasket is a component on the single cell 21 configured to insulate the electrode post terminal from the upper cover plate.

The embodiment above may effectively address the sealing problem of the shell 5 in such large-capacity batteries. However, it requires two sealing operations, typically performed by welding, meaning that both the bottom and the top of the hollow component need to be welded to the upper cover plate of the single cell 21 and the shell 5, respectively, which results in relatively complex processing steps.

To overcome the problems above, Embodiments 13 to 18 provide a large-capacity battery that employs a different method to seal the gaps between the electrode post terminal clearance holes and the electrode post terminals of the single cells.

### Embodiment 13

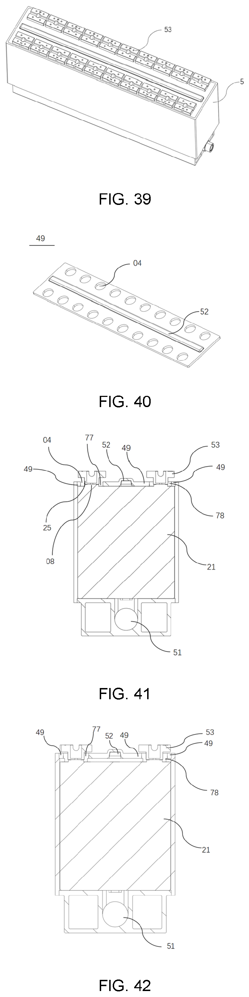

The structure of the large-capacity battery in this embodiment is shown in FIGS. 39 to 41. The large-capacity battery includes a shell 5, ten single cells 21, and twenty terminal post adapters 53. In other embodiments, the number of single cells 21 and terminal post adapters 53 may be adjusted according to actual requirements. Ten single cells 21 are arranged in parallel within the shell 5. An electrolyte shared chamber 51 is disposed in the bottom plate of the shell 5, and the electrolyte shared chamber 51 is in communication with electrolyte regions of the inner cavities of the single cells 21. A gas chamber 52 is disposed in the top plate 49 of the shell. The gas chamber 52 may be in communication with the gas regions of the inner cavities of the single cells 21. The gas chamber 52 may also serve as an explosion vent channel. When any single cell 21 undergoes thermal runaway, the thermal runaway gases generated in the inner cavity of the single cell 21 enter the gas chamber 52 and rupture the explosion vent mechanism disposed on either end of the gas chamber 52, allowing the gases to be discharged.

In other embodiments, a gas chamber may not be disposed in the top plate 49 of the shell.

Referring to FIG. 40, in this embodiment, electrode post terminal clearance holes 04 corresponding to the electrode post terminals 08 of each single cell are formed in the top plate 49 of the shell.

Referring to FIG. 16, in this embodiment, the terminal post adapter 53 includes a terminal post adapter main body 22 and an electrical connecting post 25 disposed on the terminal post adapter main body 22. The terminal post adapter main body 22 is a rectangular block, and the electrical connecting post 25 is a projecting portion projecting from the terminal post adapter main body 22.

As can be seen from FIGS. 39 and 41, in this embodiment, a terminal post adapter 53 is connected to both the positive electrode post terminal and the negative electrode post terminal of each single cell 21. The electrical connecting post 25 of the terminal post adapter 53 extends into the electrode post terminal clearance hole 04 to connect to the electrode post terminal 08 of the single cell located in the inner cavity of the shell 5 (or the electrical connecting post 25 of the terminal post adapter 53 extends into the electrode post terminal clearance hole 04 to connect to the electrode post terminal 08 of the single cell that extends into the electrode post terminal clearance hole 04). As can be seen from FIG. 41, after the terminal post adapter 53 is connected to the electrode post terminal 08 of the single cell, an annular gap 77 exists between the electrical connecting post 25 of the terminal post adapter 53 and the electrode post terminal clearance hole 04. To seal this annular gap 77, an insulating sealing adhesive layer 78 is filled in this region in this embodiment. For clarity in illustrating the insulating sealing adhesive layer 78, in FIG. 41, the annular gap 77 corresponding to the left-side terminal post adapter 53 is not filled with the insulating sealing adhesive layer 78, whereas the annular gap 77 corresponding to the right-side terminal post adapter 53 is filled with the insulating sealing adhesive layer 78.

In other embodiments, the electrode post terminals 08 of the single cells 21 may extend through the electrode post terminal clearance holes 04 in the shell 5 to connect to the terminal post adapters 53. In this case, the terminal post adapter 53 may either be a terminal post adapter with an electrical connecting post 25 or be a terminal post adapter without an electrical connecting post 25. An insulating sealing adhesive layer 78 may be injected into the annular gap 77 between the electrode post terminals 08 of the single cells and the electrode post terminal clearance holes 04, thereby sealing the annular gap 77.

The insulating sealing adhesive layer 78 used in this embodiment is typically a battery potting adhesive commonly used in batteries. For example, organic silicone thermally conductive potting adhesive may be used, which has good sealing, insulation, vibration resistance, heat dissipation, and waterproof functions.

In this embodiment, by filling the annular gap 77 with the insulating sealing adhesive layer 78, the process is simpler and easier to operate compared to the two welding steps of the related art above. In addition, even if the tops (i.e., upper cover plates) of the single cells 21 are uneven, causing gaps between the upper cover plates of certain single cells 21 and the shell 5 in some large-capacity batteries, no sealing failure occurs.

### Embodiment 14

When the inner surface of the top plate 49 of the shell closely contacts the upper cover plate of the single cell 21, the insulating sealing adhesive layer 78 may not penetrate the electrolyte in the inner cavity of the shell 5, as shown in FIG. 41. However, when there is a relatively large gap between the inner surface of the top plate 49 and the upper cover plate of the single cell 21, as shown in FIG. 42, during injection of the insulating sealing adhesive layer 78 into the annular gap 77, gravity may cause the insulating sealing adhesive layer 78 to flow from the annular gap 77 and the gap between the inner surface of the top plate 49 of the shell and the upper cover plate of the single cell 21 into the electrolyte in the inner cavity of the shell 5. If the insulating sealing adhesive layer 78 contains substances that may react with the electrolyte, this may adversely affect battery performance.

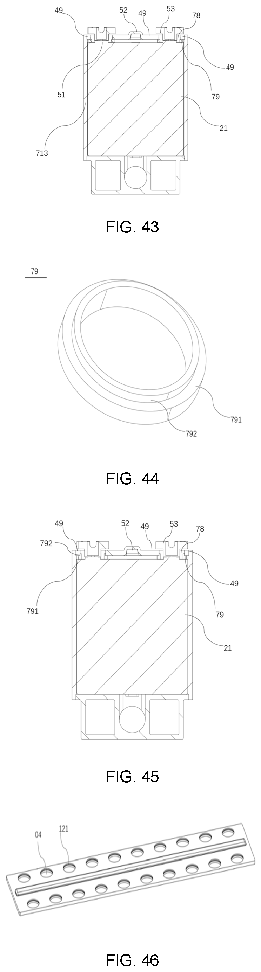

To overcome this problem, as shown in FIG. 43, in this embodiment, an elastic adhesive retaining ring 79 is sleeved around each electrode post terminal 08 of the single cells. The lower end of the elastic adhesive retaining ring 79 is in close contact with the upper cover plate of the single cell 21, and the upper end of the elastic adhesive retaining ring 79 is in close contact with the inner surface of the top plate 49 of the shell. In addition to acting as an adhesive retaining material, the elastic adhesive retaining ring 79 further provides a sealing function. When used in conjunction with the insulating sealing adhesive layer 78, it may achieve enhanced sealing performance.

The elastic adhesive retaining ring 79 may be made of a plastic material, possessing some elasticity and being chemically inert with respect to the electrolyte. The elastic adhesive retaining ring 79 does not necessarily need to be directly connected to the corresponding upper cover plate of the single cell 21 and may simply be placed in position. The top plate 49 of the shell may press the elastic adhesive retaining ring 79 onto the upper cover plate of the corresponding single cell 21. To avoid the elastic adhesive retaining ring 79 from falling off or shifting during mounting, the lower end of the elastic adhesive retaining ring 79 may be bonded to the upper cover plate of the corresponding single cell 21. Alternatively, an annular groove may be pre-formed in the upper cover plate of the single cell 21 to fix the elastic adhesive retaining ring 79 in place.

For a large-capacity battery in which the top plate 49 of the shell and the side plates 713 of the shell (including the side plates parallel to the xz plane and yz plane) are modular structures, the assembly method may be as follows:
After the single cells 21 are placed into a cylindrical body formed by the bottom plate of the shell 5 and the side plates 713 of the shell (with only the top end open), the elastic adhesive retaining rings 79 corresponding to the electrode post terminals 08 of the single cells are placed around the electrode post terminals 08 on the upper cover plates of the single cells. The top plate 49 of the shell is then fixed to the open end of the cylindrical body, pressing the elastic adhesive retaining rings 79, using the top plate 49 of the shell, onto the upper cover plates of the single cells 21 to achieve a first sealing. Next, the terminal post adapters 53 are fixedly connected to the corresponding electrode post terminals 08 of the single cells. Finally, the insulating sealing adhesive layer 78 is injected into the annular gaps 77 from the gaps between the lower surface of the terminal post adapter main body 22 and the upper surface of the top plate 49 of the shell, thereby achieving a second sealing. Under the blockage of the elastic adhesive retaining ring 79, the insulating sealing adhesive layer 78 is prevented from penetrating the electrolyte in the inner cavity of the shell 5.

For the large-capacity battery in which the top plate 49 of the shell and the side plate 713 of the shell (including the side plates parallel to the xz plane) are an integral structure, the assembly method may be as follows:
The elastic adhesive retaining rings 79 corresponding to the electrode post terminals 08 of the single cells are fixed around the electrode post terminals 08 on the upper cover plate of the single cell. The single cells 21, equipped with the elastic adhesive retaining rings 79, are then inserted into the cylindrical body formed by the bottom plate of the shell 5, the top plate 49 of the shell, and the side plate 713 of the shell (including the side plates parallel to the xz plane), with the two ends parallel to the yz plane left open. The height of each elastic adhesive retaining ring 79 is slightly greater than the height of the corresponding electrode post terminal 08 of the single cell, and each elastic adhesive retaining ring 79 possesses elasticity. Upon insertion of the single cells 21 into the cylindrical body, the elastic adhesive retaining rings 79 are compressed tightly between the top plate 49 of the shell and the upper cover plate of the corresponding single cell 21, achieving a first sealing. Next, the terminal post adapters 53 are fixedly connected to the corresponding electrode post terminals 08 of the single cells. Finally, the insulating sealing adhesive layer 78 is injected into the annular gaps 77 from the gaps between the lower surface of the terminal post adapter main body 22 and the upper surface of the top plate 49 of the shell, thereby achieving a second sealing. Under the blockage of the elastic adhesive retaining ring 79, the insulating sealing adhesive layer 78 is prevented from penetrating the electrolyte in the inner cavity of the shell 5.

It is to be noted that, for the large-capacity battery in which the top plate 49 of the shell and the side plate 713 of the shell (including the side plates parallel to the xz plane) are an integral structure, to avoid the elastic adhesive retaining rings 79 from detaching from the upper cover plates of the single cells 21 during insertion of the single cells 21 equipped with the elastic adhesive retaining rings 79 into the cylindrical body, it is preferable to fix the elastic adhesive retaining rings 79 onto the upper cover plates of the single cells. This may be achieved by bonding or by providing mounting grooves on the upper cover plates of the single cells 21 to accommodate the elastic adhesive retaining rings 79.

### Embodiment 15

Different from Embodiment 14, in this embodiment, the structure of the elastic adhesive retaining ring 79 in Embodiment 14 is optimized, which further enhances the adhesive retaining and sealing performance of the elastic adhesive retaining ring 79.

As shown in FIGS. 44 and 45, in this embodiment, an annular notch is formed in the upper end of the elastic adhesive retaining ring 79 of Embodiment 14, forming a first mating surface 791 and a second mating surface 792 in the upper end of the elastic adhesive retaining ring 79. When the elastic adhesive retaining ring 79 is tightly compressed between the top plate 49 of the shell and the upper cover plates of the single cells 21, the first mating surface 791 is in close contact with the lower surface of the top plate 49 of the shell, and the second mating surface 792 is in close contact with the wall of the corresponding electrode post terminal clearance hole 04 close to the upper cover plate of the single cell 21. Upon glue injection into the annular gap 77, the insulating sealing adhesive layer 78 is prevented from penetrating the gap between the elastic adhesive retaining ring 79 and the top plate 49 of the shell, thereby further enhancing the sealing and adhesive retaining performance at this part. As shown in FIGS. 44 and 45, in this embodiment, an annular notch is formed in the upper end of the elastic adhesive retaining ring 79 of Embodiment 14, forming a first mating surface 791 and a second mating surface 792 in the upper end of the elastic adhesive retaining ring 79. When the elastic adhesive retaining ring 79 is tightly compressed between the top plate 49 of the shell and the upper cover plates of the single cells 21, the first mating surface 791 is in close contact with the lower surface of the top plate 49 of the shell, and the second mating surface 792 is in close contact with the wall of the corresponding electrode post terminal clearance hole 04 close to the upper cover plate of the single cell 21. Upon glue injection into the annular gap 77, the insulating sealing adhesive layer 78 is prevented from penetrating the gap between the elastic adhesive retaining ring 79 and the top plate 49 of the shell, thereby further enhancing the sealing and adhesive retaining performance at this part.

### Embodiment 16

Different from the embodiments above, in this embodiment, the structure of the electrode post terminal clearance hole 04 is optimized. This optimization enhances the compressive resistance of the insulating sealing adhesive layer 78, avoiding the insulating sealing adhesive layer 78 from being extruded when the internal pressure of the large-capacity battery rises, and avoiding any compromise to the sealing performance of the large-capacity battery.

As can be seen from FIGS. 46, 47, and 48, in this embodiment, a first annular groove 121 is formed in the wall of the electrode post terminal clearance hole 04 along a circumferential direction of the electrode post terminal clearance hole 04. During glue injection into the annular gap 77, the adhesive penetrates the first annular groove 121, forming a stop-fit structure at this part. After curing, the insulating sealing adhesive layer 78 in the first annular groove 121 acts as a protruding stop, while the first annular groove 121 serves as a recessed stop. The two cooperate to prevent the insulating sealing adhesive layer 78 from detaching.

In other embodiments, a plurality of first annular grooves 121 may be formed in the wall of the electrode post terminal clearance hole 04, which may further enhance the bonding strength of the insulating sealing adhesive layer 78 within the electrode post terminal clearance hole 04.

### Embodiment 17

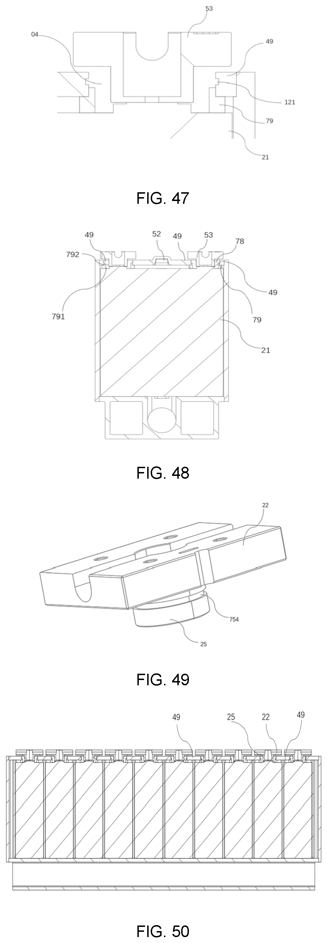

Different from the embodiments above, as shown in FIGS. 49, 50, and 51, in this embodiment, a second annular groove 754 is formed in the electrical connecting post 25 of the terminal post adapter 53 along a circumferential direction of the electrical connecting post 25. During glue injection into the annular gap 77, the adhesive penetrates the second annular groove 754, forming a stop-fit structure at this location. After curing, the insulating sealing adhesive layer 78 in the second annular groove 754 acts as a protruding stop, while the second annular groove 754 serves as a recessed stop. The two cooperate to prevent the insulating sealing adhesive layer 78 from detaching.

In other embodiments, a plurality of second annular grooves 754 may be formed in the electrical connecting post 25, which may further enhance the bonding strength of the insulating sealing adhesive layer 78 within the electrode post terminal clearance hole 04.

In other embodiments, when the electrode post terminals of the single cells extend into the electrode post terminal clearance holes, second annular grooves 754 may also be formed in the electrode post terminals of the single cells along a circumferential direction.

In other embodiments, when portions of both the electrode post terminals of the single cells and the electrical connecting posts 25 of the terminal post adapter 53 extend into the electrode post terminal clearance holes, second annular grooves 754 may be formed in the parts of the electrode post terminals of the single cells that extend into the electrode post terminal clearance holes along a circumferential direction. Moreover, a second annular groove 754 is formed in the parts of the electrical connecting posts 25 that extend into the electrode post terminal clearance holes along a circumferential direction of the electrical connecting posts 25.

### Embodiment 18

Different from the embodiments above, in this embodiment, the terminal post adapter 53 is an elongated component. As shown in FIG. 13, two such elongated components are connected to a positive pole and a negative pole of all the single cells 21, respectively, serving as the positive terminal and the negative terminal of the large-capacity battery.

A plurality of electrical connecting posts 25 are disposed on the elongated component. The electrical connecting posts 25 are projecting portions projecting from the elongated component. Each electrical connecting post 25 is configured to connect to the positive electrode post terminal or the negative electrode post terminal of all the single cells 21 in the large-capacity battery. Blind holes may be formed in the elongated component, each corresponding to an electrical connecting post 25 and extending into the electrical connecting post 25. A conductive post is disposed in each blind hole, and the outer wall of the conductive post is in close contact with the inner wall of the blind hole to enhance the electrical conductivity of the terminal post adapter 53.

The glue injection positions in this embodiment are the same as those in the embodiments above and are not repeated here.

The following embodiments provide a large-capacity battery that differs from the embodiments above.

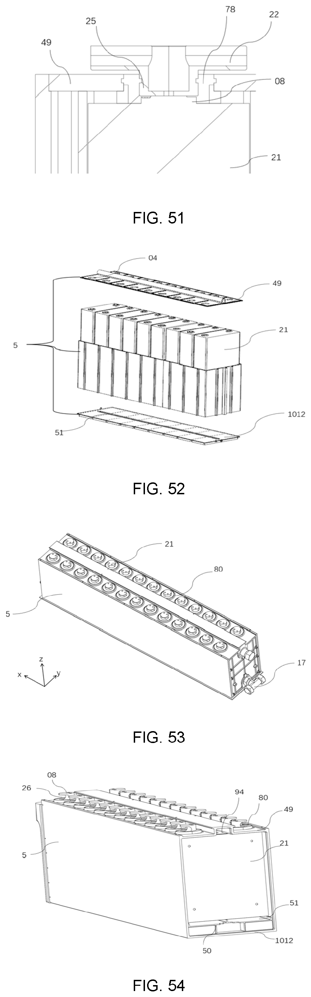

Chinese Patent CN220324596U discloses a large-capacity battery, the structure of which is shown in FIG. 52. The large-capacity battery includes a shell 5 and a plurality of single cells 21, and the plurality of single cells are connected in parallel and sequentially arranged within the inner cavity of the shell. An electrolyte shared chamber 51 is disposed in the bottom plate 1012 of the shell, and the electrolyte shared chamber 51 is in communication with the electrolyte regions of the inner cavities of the single cells. Electrode post terminal clearance holes 04 through which polarity terminals of the single cells extend are formed in the top plate 49 of the shell. The polarity terminals of the single cells extend through the electrode post terminal clearance holes 04, and the regions of the top plate 49 of the shell corresponding to the electrode post terminal clearance holes 04 are fixedly sealed to the housings of the single cells. Chinese Patent CN220324596U discloses a large-capacity battery, the structure of which is shown in FIG. 52. The large-capacity battery includes a shell 5 and a plurality of single cells 21, and the plurality of single cells are connected in parallel and sequentially arranged within the inner cavity of the shell. An electrolyte shared chamber 51 is disposed in the bottom plate 1012 of the shell, and the electrolyte shared chamber 51 is in communication with the electrolyte regions of the inner cavities of the single cells. Electrode post terminal clearance holes 04 through which polarity terminals of the single cells extend are formed in the top plate 49 of the shell. The polarity terminals of the single cells extend through the electrode post terminal clearance holes 04, and the regions of the top plate 49 of the shell corresponding to the electrode post terminal clearance holes 04 are fixedly sealed to the housings of the single cells. The electrolytes in inner cavities of the single cells are in communication with each other via the electrolyte shared chamber, such that the electrolytes of all the single cells are within the same system. This reduces differences among the electrolytes of the single cells and enhances the consistency among the single cells to some extent, thereby enhancing the cycle life of the large-capacity battery to some extent.

It is to be noted that the polarity terminals of the single cell, as described above, may be the electrode post terminals of the single cells. To avoid cases where the electrode post terminals of the single cells, as the polarity terminals, cannot smoothly extend through the electrode post terminal clearance holes, or where the height of the electrode post terminals extending through the electrode post terminal clearance holes does not meet the required specifications, an additional terminal post adapter may be attached to the electrode post terminal of the single cell. This combined structure of the electrode post terminal of the single cell and the terminal post adapter serves as the polarity terminal of the single cell.

A plurality of large-capacity batteries described above may be assembled to form an energy storage device. Typically, the explosion vent pipes of the large-capacity batteries (each explosion vent pipe being a pipe segment fixed to the shell and in communication with the inner cavity of the shell, with an explosion vent membrane fixed in the pipe segment) are in communication with an explosion vent manifold, the outlet end of which is led out of the case of the energy storage device. When thermal runaway occurs in any large-capacity battery, the thermal runaway gases are sequentially discharged through the explosion vent pipe and the explosion vent manifold out of the case of the energy storage device, avoiding the thermal runaway gases from spreading throughout the energy storage device after thermal runaway and causing safety hazards.

However, experimental results have shown that when some single cells in the large-capacity battery above undergo thermal runaway, after approximately 10 minutes, the thermal runaway gases may leak through the gap between the polarity terminals of the single cells and the electrode post terminal clearance holes. Therefore, when the plurality of large-capacity batteries above are assembled into an energy storage device, in the event of thermal runaway, the thermal runaway gases may not only be discharged via the explosion vent pipes into the explosion vent manifold, but may also leak through the gaps between the polarity terminals of the single cells and the electrode post terminal clearance holes, spreading throughout the case of the energy storage device. This may cause the thermal runaway to persist and propagate, and in severe cases, may result in an explosion of the large-capacity batteries or even the entire energy storage device.

The following embodiments provide a large-capacity battery and an energy storage device, which overcome the problem in conventional large-capacity batteries where thermal runaway gases tend to leak from the positive electrode post terminal and the negative electrode post terminal of the single cells, causing the thermal runaway gases to spread and leading to safety hazards.

The concept of the following embodiments is as follows:
On the basis of the problem above, the large-capacity battery after thermal runaway described above is disassembled. It is found that positive electrode post terminals and negative electrode post terminals of the single cells that have undergone thermal runaway have detached. Analysis indicates that this phenomenon occurs because the temperature resistance of the positive electrode post terminals and the negative electrode post terminals of the single cells is relatively poor. When the temperature reaches approximately 320°C and persists for about 10 minutes, the positive electrode post terminals and the negative electrode post terminals may detach or cracks may form between the electrode post terminals and the upper cover plate of the single cells, causing the thermal runaway gases to leak from the positive electrode post terminals and the negative electrode post terminals and diffuse to the exterior of the shell via the electrode post terminal clearance holes.

On the basis of this, the following embodiments provide that a first insulating sealing adhesive is poured into the gap between the polarity terminals of the single cells and the electrode post terminal clearance holes. After curing, a first insulating sealing adhesive layer is formed, avoiding the occurrence of the problems above.

The first insulating sealing adhesive is required to have high-temperature resistance, such that it may remain stable in an environment above 320°C without degradation of performance, and to possess insulating properties. Generally, an epoxy potting adhesive having a temperature resistance exceeding 320°C may be used, or other commonly used potting adhesives capable of withstanding temperatures above 320°C may be employed.

On the basis of different structures of the polarity terminals of the single cells, the function of the first insulating sealing adhesive layer may be discussed in two scenarios:
1. The polarity terminal of the single cell is an electrode post terminal of a single cell:
   **In** this case, the first insulating sealing adhesive layer is located in the gap between the electrode post terminal of the single cell and the electrode post terminal clearance hole, and is in direct contact with the electrode post terminal of the single cell. First, the first insulating sealing adhesive layer serves to protect and fix the electrode post terminal of the single cell. Under the protection and fixation provided by the first insulating sealing adhesive layer, when thermal runaway occurs, the electrode post terminal of the single cell is less likely to detach or form cracks with the upper cover plate of the single cell, preventing thermal runaway gases from leaking through the gap between the electrode post terminal of the single cell and the electrode post terminal clearance hole. Second, the first insulating sealing adhesive layer also seals the gap between the electrode post terminal of the single cell and the electrode post terminal clearance hole, thereby ensuring the sealing performance at this part.

It is to be noted that, in this case, the electrode post terminal of the single cell extends through the electrode post terminal clearance hole, and the protruding height satisfies a preset requirement. For example, a heat transfer pipe clamping portion may be provided at the part of the electrode post terminal of the single cell extending through the electrode post terminal clearance hole to fix a heat transfer pipe, thereby enhancing the heat dissipation performance of the large-capacity battery.

If the heat transfer pipe is a liquid cooling pipe, due to the temperature difference between the interior and exterior of the liquid cooling pipe, condensation may form on the surface. When the condensation accumulates to a certain amount, it may seep into the gap between the electrode post terminal and the electrode post terminal clearance hole, causing electrical conductivity between the electrode post terminal and the shell. This may potentially lead to a short circuit in the same single cell. Therefore, after the first insulating sealing adhesive is poured into the gap between the electrode post terminal and the electrode post terminal clearance hole, even if condensation occurs, the condensate is prevented by the first insulating sealing adhesive layer from seeping into the gap between the electrode post terminal and the electrode post terminal clearance hole, preventing the occurrence of a battery short circuit.

2. The polarity terminal of the single cell is an integral structure formed by the cooperation of the electrode post terminal of the single cell and a terminal post adapter (including cases where the electrode post terminal of the single cell cannot smoothly extend through the electrode post terminal clearance hole, or may extend therethrough but the protruding height does not meet a preset requirement).

**In** this case, the first insulating sealing adhesive layer is also in direct contact with the electrode post terminal of the single cell, and the function of the first insulating sealing adhesive layer is the same as that described in the first scenario above.

**It** is to be noted that, although this case includes a situation in which the electrode post terminal of the single cell extends through the electrode post terminal clearance hole, the protruding height is insufficient to dispose a heat transfer pipe clamping portion thereon. Therefore, it is still necessary to dispose a terminal post adapter on the electrode post terminal of the single cell to form the heat transfer pipe clamping portion and fix the heat transfer pipe.

The following is described in detail with reference to the drawings.

The following embodiment provides a large-capacity battery, including a shell and a plurality of single cells. The plurality of single cells are arranged and disposed within the shell along the same direction. The inner cavity of the shell is in communication with the inner cavities of all the single cells.

A rectangular shell is generally adopted. For convenience of description, the length direction of the shell is defined as an x direction, the width direction of the shell is defined as a y direction, and the height direction of the shell is defined as a z direction.

The structure of the shell is not particularly limited, and at least the following two configurations may be adopted:
A first configuration: The shell includes a cylindrical body having two open ends (i.e., the ports parallel to the yz plane are open ends), and end plates fixed to the two open ends of the cylindrical body, respectively (i.e., the end plates are parallel to the yz plane).

A second configuration: The shell includes a cylindrical body having open ends at the top and bottom (i.e., the ports parallel to the xy plane are open ends), and an upper cover plate and a lower cover plate fixed to the top and bottom open ends of the cylindrical body, respectively (i.e., both the upper cover plate and the lower cover plate are parallel to the xy plane).

In the following description, the plates of the shell that are parallel to the xy plane are defined as a top plate of the shell and a bottom plate of the shell, respectively.

Preferably, a shared chamber may be disposed in the shell, such that the inner cavity of the shared chamber is in communication with the inner cavities of all the single cells, thereby achieving the communication effect above.

It is to be noted that:
The shared chamber above may be an electrolyte shared chamber. The electrolyte shared chamber may ensure that the single cells are within a uniform electrolyte environment, maintaining the uniformity of the electrolyte in the single cells. This enhances the performance and charge/discharge cycle life of the large-capacity battery. The electrolyte shared chamber described herein is a liquid channel extending along the length direction of the shell and located between the bottom plate of the shell and the single cells. The liquid channel may be integrally formed with the bottom plate of the shell, or may be formed by disposing a support member between a lower cover plate of the single cells and the bottom plate of the shell.

The shared chamber above may be a gas shared chamber. The gas shared chamber may achieve gas balance of the single cells, thereby further enhancing the performance and charge/discharge cycle life of the large-capacity battery.

The shared chamber above may be a gas-liquid shared chamber. A single gas-liquid shared chamber allows all single cells to be within a uniform electrolyte and gas environment, thereby enhancing the performance and charge/discharge cycle life of the large-capacity battery.

To enhance the heat dissipation performance of such a large-capacity battery, electrode post terminal clearance holes corresponding to the polarity terminals of the single cells are formed in the top plate of the shell. The polarity terminals of the single cells extend through the corresponding electrode post terminal clearance holes and serve as the polarity terminals of the large-capacity battery (all polarity terminals of the single cells located on one side serve as a first polarity terminal of the large-capacity battery, and all polarity terminals of the single cells located on the other side serve as a second polarity terminal of the large-capacity battery, wherein the first polarity terminal and the second polarity terminal have opposite polarities). A region of the top plate of the shell corresponding to each electrode post terminal clearance hole is fixedly sealed to the housing of the single cell, such that sealing is achieved at the parts of the electrode post terminal clearance holes in the top plate of the shell.

It is to be noted that the polarity terminals of the single cell described herein may be the electrode post terminals of the single cells. To avoid cases where the electrode post terminals of the single cells, as the polarity terminals, cannot smoothly extend through the electrode post terminal clearance holes, or where the height of the electrode post terminals extending through the electrode post terminal clearance holes does not meet the required specifications, an additional terminal post adapter may be attached to the electrode post terminal of the single cell. This combined structure of the electrode post terminal of the single cell and the terminal post adapter serves as the polarity terminal of the single cell.

To discharge thermal runaway gases from the interior of the shell of the large-capacity battery, an explosion vent pipe in communication with the inner cavity of the shell is disposed on the shell. Under normal circumstances, the explosion vent pipe is directly in communication with the shared chamber above.

When an energy storage device is assembled using the large-capacity batteries above, if a single cell in any one of the large-capacity batteries undergoes thermal runaway, after approximately 10 minutes, due to detachment of the electrode post terminal of the single cell, thermal runaway gases may leak from a gap between the polarity terminal of the single cell and the electrode post terminal clearance hole and then diffuse throughout the case of the energy storage device. This may cause the thermal runaway to continue and propagate, and in severe cases may result in rupture or explosion of the large-capacity battery or even the entire energy storage device.

On the basis of the problems above, the leakage part of thermal runaway gases in the large-capacity battery is improved as follows:
A first insulating sealing adhesive is injected into the gap between the polarity terminal of the single cell and the electrode post terminal clearance hole. After curing, a first insulating sealing adhesive layer is formed, wherein the first insulating sealing adhesive is an insulating sealing adhesive having a temperature resistance higher than the temperature of the thermal runaway gases. Generally, the temperature resistance thereof needs to be higher than 320°C, and it is to be capable of remaining stable for a sustained period. In general, an electronic device potting adhesive having a temperature resistance higher than 320°C may be selected, for example, an epoxy potting adhesive with a temperature resistance exceeding 320°C.

When the polarity terminal of the single cell is an electrode post terminal of the single cell, or when the polarity terminal of the single cell is an integral structure formed by cooperation of the electrode post terminal of the single cell and a terminal post adapter, the first insulating sealing adhesive layer is located in the gap between the electrode post terminal of the single cell and the electrode post terminal clearance hole, and is in direct contact with the electrode post terminal of the single cell. First, the first insulating sealing adhesive layer serves to protect and fix the electrode post terminal of the single cell. Under the protection and fixation provided by the first insulating sealing adhesive layer, when thermal runaway occurs, the electrode post terminal of the single cell is less likely to detach or form cracks with the upper cover plate of the single cell, preventing thermal runaway gases from leaking through the gap between the polarity terminal of the single cell and the electrode post terminal clearance hole. Second, the first insulating sealing adhesive layer also seals the gap between the polarity terminal of the single cell and the electrode post terminal clearance hole, thereby further enhancing the sealing performance at the electrode post terminal clearance hole of the shell.

The following embodiment further discloses an energy storage device, including a case, an explosion vent manifold, and a plurality of large-capacity batteries described above located within the case, wherein explosion vent pipes of the large-capacity batteries are in communication with the explosion vent manifold, and an outlet end of the explosion vent manifold extends through the case.

When a single cell within any large-capacity battery in the energy storage device undergoes thermal runaway, the thermal runaway gases are discharged only via the explosion vent manifold, reducing the risk of thermal runaway gas diffusion, explosion of the large-capacity battery, or even explosion of the energy storage device.

### Embodiment 19

As shown in FIGS. 53 and 54, the large-capacity battery in this embodiment includes a shell 5 and a plurality of single cells 21 arranged within the shell 5 along the x direction.

In this embodiment, the single cells 21 are prismatic batteries, and the number thereof is 13. An inner cavity of each single cell 21 includes an electrolyte region and a gas region. In other embodiments, the number of the single cells 21 may be adjusted according to actual requirements, and the form of the single cells 21 may be adjusted according to actual requirements.

Referring to FIG. 54, an electrolyte shared chamber 51 is disposed between the bottom plate 1012 of the shell and the single cells 21 along the x direction. An inner cavity of the electrolyte shared chamber 51 is in communication with the electrolyte region of the inner cavity of each single cell 21. As can be seen from the drawings, in this embodiment, the electrolyte shared chamber 51 is a liquid channel extending in the x direction between the bottom plate 1012 of the shell and the single cells 21, formed by disposing a support member 50 between the lower cover plate of each single cell 21 and the bottom plate 1012 of the shell (as shown in FIG. 54).

In the top plate 49 of the shell, a gas shared chamber 94 is disposed along the x direction. The inner cavity of the gas shared chamber 94 is in communication with the gas region of the inner cavity of each single cell 21.

In other embodiments, only the electrolyte shared chamber 51 or the gas shared chamber 94 may be disposed. Additionally, a gas-liquid shared chamber may be disposed along the x direction in the first sidewall (the side plate parallel to the xz plane) of the shell 5. The inner cavity of the gas-liquid shared chamber is in communication with the electrolyte region and the gas region of the inner cavity of each single cell 21.

A through hole in communication with the electrolyte shared chamber 51 is formed in the second side plate of the shell 5 (the side plate parallel to the yz plane), and an explosion vent pipe 17 is connected to the through hole.

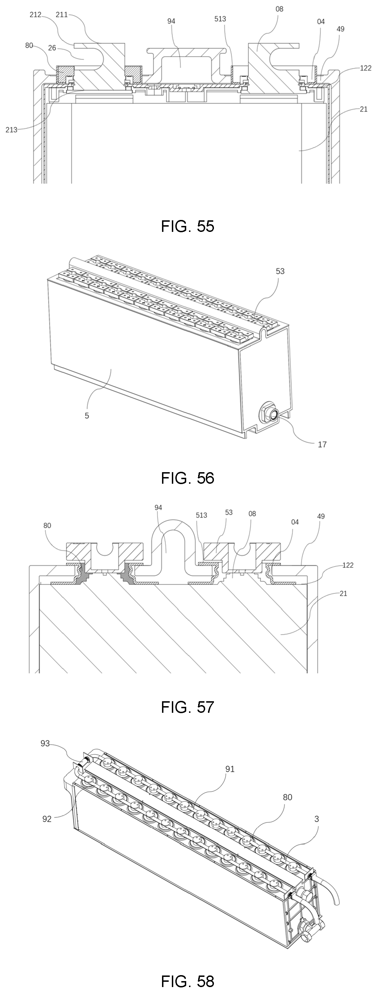

As shown in FIG. 55, in this embodiment, electrode post terminal clearance holes 04 through which the polarity terminals of each single cell 21 extend are formed in the top plate 49 of the shell of the large-capacity battery; in this embodiment, the polarity terminals of the single cells 21 correspond to the electrode post terminals 08 of the single cell.

The electrode post terminals 08 of the single cells extend through the corresponding electrode post terminal clearance holes 04, and regions of the top plate 49 of the shell corresponding to the electrode post terminal clearance holes 04 are fixedly sealed to a housing 122 of the single cell.

The region of the top plate 49 of the shell surrounding the electrode post terminal clearance hole 04 may typically be directly welded to the housing 122 of the single cell to achieve sealing.

However, when the dimensions of the single cells 21 along the z direction are not completely uniform, some housings 122 of the single cell with smaller z-direction dimensions may result in poor soldering or may even be impossible to weld to the top plate 49 of the shell of the large-capacity battery, making it difficult to ensure sealing at the electrode post terminal clearance holes 04.

To overcome such problems, a weakened portion may be disposed in the region surrounding the electrode post terminal clearance hole 04. During welding, deformation of the weakened portion compensates for variations in the z direction dimensions of the single cells 21, enabling the region of the top plate 49 of the shell around the electrode post terminal clearance hole 04 to be sealedly welded to the housing 122 of the single cell. The weakened portion may be an annular groove formed around the electrode post terminal clearance hole 04, with the center of the electrode post terminal clearance hole 04 as its center. Alternatively, the weakened portion may be a strip-shaped groove formed in the region surrounding the electrode post terminal clearance hole 04.

A sealing connector 513 may also be disposed between the electrode post terminal clearance hole 04 and the electrode post terminal. The sealing connector 513 includes a hollow component, one end of the hollow component is configured for sealing connection to a first region of the single cell 21, and the other end of the hollow component is configured for sealing connection to a second region of the top plate 49 of the shell. The first region refers to any region surrounding an electrode post terminal on the housing 122 of any single cell 21, wherein the region surrounding the electrode post terminal corresponds to the region around the insulating sealing gasket on the electrode post terminal. The insulating sealing gasket is a component on the single cell 21 configured to insulate the electrode post terminal from the housing of the single cell. The second region refers to the region of the top plate 49 of the shell corresponding to any electrode post terminal clearance hole 04 in the top plate 49 of the shell. The region of the top plate 49 of the shell corresponding to the electrode post terminal clearance hole 04 is the region on the outer surface of the top plate 49 of the shell surrounding any electrode post terminal clearance hole 04, or the region of the top plate 49 of the shell corresponding to the electrode post terminal clearance hole 04 is the wall of the electrode post terminal clearance hole 04.

As shown in FIG. 55, in this embodiment, one end of the sealing connector 513 is configured for sealing connection to the first region of the single cell 21 via a first annular plate, while the outer wall of the other end of the sealing connector 513 is configured for sealing connection to the wall of the electrode post terminal clearance hole 04.

In this embodiment, a first insulating sealing adhesive is injected into the gap between the sealing connector 513 and the electrode post terminal. After curing, a first insulating sealing adhesive layer 80 is formed. The first insulating sealing adhesive used in this embodiment is an epoxy resin potting adhesive layer with a temperature resistance exceeding 320°C. To clearly illustrate the position of the first insulating sealing adhesive layer 80, in FIG. 55, the gap between the electrode post terminal on the left and the sealing connector 513 is filled with the first insulating sealing adhesive layer 80, whereas the gap between the electrode post terminal on the right and the sealing connector 513 remains without the first insulating sealing adhesive layer 80.

In this embodiment, the first insulating sealing adhesive layer 80 is located in the gap between the electrode post terminal 08 of the single cell and the electrode post terminal clearance hole 04, and the first insulating sealing adhesive layer 80 is in direct contact with the electrode post terminal 08 of the single cell. First, the first insulating sealing adhesive layer serves to protect and fix the electrode post terminal 08 of the single cell. Under the protection and fixation provided by the first insulating sealing adhesive, when thermal runaway occurs, the electrode post terminal 08 of the single cell is less likely to detach or form cracks with the upper cover plate of the single cell 21, preventing thermal runaway gases from leaking through the gap between the electrode post terminal 08 of the single cell and the electrode post terminal clearance hole 04. Second, the first insulating sealing adhesive also seals the gap between the electrode post terminal 08 of the single cell and the electrode post terminal clearance hole 04, thereby ensuring the sealing performance at this part.

After the main body structure of the large-capacity battery has been assembled, a first insulating sealing adhesive is injected into the gap between the electrode post terminal 08 of the single cell and the electrode post terminal clearance hole 04. Once the adhesive layer has cured, the large-capacity battery of this embodiment is obtained.

### Embodiment 20

Different from Embodiment 19, in this embodiment, the polarity terminal of the single cell 21 is an integral structure in which the electrode post terminal 08 of the single cell and the terminal post adapter 53 are mated. As shown in FIGS. 56 and 57, in this embodiment, the electrode post terminals 08 are located within the electrode post terminal clearance hole 04, but do not completely extend through the electrode post terminal clearance hole 04, and therefore, it is necessary to fix the terminal post adapter 53 as a polarity terminal to the electrode post terminals 08 of the single cells.

In other embodiments, the electrode post terminals 08 of the single cells extend through the corresponding electrode post terminal clearance holes 04, but the protruding height does not meet the specified requirements. Similar to this embodiment, terminal post adapters 53 are fixed onto the electrode post terminals 08 of the single cells to serve as the polarity terminals.

In this embodiment, one end of the sealing connector 513 is configured for sealing connection to the first region of the single cell 21 via a first annular plate, and the other end of the sealing connector 513 is configured for sealing connection to the region on the outer surface of the top plate 49 of the shell corresponding to any electrode post terminal clearance hole 04 via a second annular plate.

Similar to Embodiment 19, in this embodiment, a first insulating sealing adhesive is injected into the gap between the sealing connector 513 and the electrode post terminals 08 of the single cells. After curing, a first insulating sealing adhesive layer 80 is formed. The first insulating sealing adhesive used in this embodiment is an epoxy resin potting adhesive layer with a temperature resistance exceeding 320°C.

In this embodiment, the first insulating sealing adhesive layer 80 is located in the gap between the electrode post terminal 08 of the single cell and the electrode post terminal clearance hole 04, and the first insulating sealing adhesive layer 80 is in direct contact with the electrode post terminal 08 of the single cell. First, the first insulating sealing adhesive layer serves to protect and fix the electrode post terminal 08 of the single cell. Under the protection and fixation provided by the first insulating sealing adhesive, when thermal runaway occurs, the electrode post terminal 08 of the single cell is less likely to detach or form cracks with the upper cover plate of the single cell 21, preventing thermal runaway gases from leaking through the gap between the electrode post terminal 08 of the single cell and the electrode post terminal clearance hole 04. Second, the first insulating sealing adhesive also seals the gap between the electrode post terminal 08 of the single cell and the electrode post terminal clearance hole 04, thereby ensuring the sealing performance at this part.

In this embodiment, after the main body structure of the large-capacity battery has been assembled, a first insulating sealing adhesive is injected into the gap between the electrode post terminal 08 of the single cell and the electrode post terminal clearance hole 04. Once the adhesive layer has cured, the terminal post adapter 53 is welded to the corresponding electrode post terminal.

### Embodiment 21

To further enhance the heat dissipation performance of the large-capacity battery in the embodiments above, as shown in FIG. 58, the large-capacity battery of this embodiment further includes a heat transfer pipe 3.

In this embodiment, by disposing a heat transfer pipe 3 clamping portion at the part where the polarity terminal extends through the electrode post terminal clearance hole 04, the heat transfer pipe 3 is fixed within the heat transfer pipe 3 clamping portion, allowing direct connection between the heat transfer pipe 3 and the polarity terminal of the large-capacity battery. This arrangement enables timely dissipation of heat concentrated at the polarity terminal, thereby improving the heat dissipation performance of the large-capacity battery. In addition, when the temperature of the large-capacity battery falls below the set threshold, a heat transfer medium with a higher temperature is introduced into the heat transfer pipe 3 to heat the large-capacity battery. By controlling the temperature of the heat transfer medium, it ensures that the large-capacity battery always operates within the normal working temperature.

The following description takes the large-capacity battery of Embodiment 19 as an example.

As can be seen from FIGS. 53 and 54, in this embodiment, a through groove 26 is formed in the part where the electrode post terminal 08 of the single cell extends through the electrode post terminal clearance hole 04, which serves as the heat transfer pipe 3 clamping portion. As can be seen from FIG. 55, the polarity terminal of the single cell 21 is cylindrical, including a second end surface 213, a first end surface 211, and a side surface 212 (with the second end surface 213 and the first end surface 211 being parallel). The through groove 26 is formed in the side surface 212 of the polarity terminal, that is, the opening of the through groove 26 is located in the side surface 212.

In other embodiments, a through hole may be formed in the side surface 212, that is, the opening of the through hole is located in the side surface 212.

In other embodiments, a through groove 26 may be formed in the first end surface 211, with the opening of the through groove 26 located in the first end surface 211 (in FIG. 56, the through groove 26 is formed in the first end surface 211 of the terminal post adapter 53).

The first end surface 211 serves as the electrical connection portion of the polarity terminal, configured to connect to the first electrical connector 140 and/or the second electrical connector 150 to achieve an electrical connection between each single cell 21 and/or two large-capacity batteries. The second end surface 213 is configured to be electrically connected to the electrode assembly within the housing 122 of the single cell.

Forming the through groove 26 or the through hole in the side surface 212, as compared to forming a through groove 26 in the first end surface 211, provides a larger contact area between the heat transfer pipe 3 and the inner wall of the through groove 26 or the through hole within the through groove 26 or the through hole, thereby achieving higher heat transfer efficiency. **In** addition, when the through groove 26 or the through hole is formed in the side surface 212, the entire region of the first end surface 211 may be used as an electrical connection region. Two through grooves 26 or through holes may also be formed in the side surface 212 of the polarity terminal to increase the number of heat transfer pipes 3, further enhancing heat transfer efficiency. Compared to the structure of the through hole, the structure of the through groove 26 facilitates easier mounting of the heat transfer pipe 3.

The cross-section of the through groove 26 is C-shaped. A C-shaped through groove 26, with the opening width smaller than the widest part of the through groove 26, allows the heat transfer pipe 3 to fit tightly within the through groove 26. The curvature formed at the two ends of the C-shaped through groove 26 naturally generates tension, which is conducive to securely clamping the heat transfer pipe 3 into the through groove 26.

As shown in FIG. 58, in this embodiment, the heat transfer pipe 3 may be configured as a U-shaped pipe segment. For ease of mounting, the U-shaped pipe segment is divided into three parts, which are referred to as a first pipe 91, a second pipe 92, and a connecting pipe 93, respectively.

The first pipe 91 is fixed within the through groove 26 of the first polarity terminal of the large-capacity battery, and the second pipe 92 is fixed within the through groove 26 of the second polarity terminal of the large-capacity battery. The two ends of the connecting pipe 93 are connected to the ports of the first pipe 91 and the second pipe 92 located on the same side. The remaining ports of the first pipe 91 and the second pipe 92 serve as the inlet port and outlet port of the heat transfer pipe 3.

In other embodiments, two heat transfer pipes 3 may be employed, and the two heat transfer pipes 3 are clamped in the heat transfer pipe 3 clamping portion of the first polarity terminal and the second polarity terminal of the large-capacity battery, respectively.

In this embodiment, the heat transfer pipe 3 may be a heat pipe, a liquid cooling pipe, or the like.

When the heat transfer pipe 3 is a liquid cooling pipe, during long-term use, due to the temperature difference inside and outside the liquid cooling pipe, condensation may form on the surface. When the condensation accumulates to a certain amount, it may seep into the gap between the polarity terminal and the electrode post terminal clearance hole 04, causing electrical conductivity between the polarity terminal and the shell 5. This may potentially lead to a short circuit in the same single cell 21.

In this embodiment, since a first insulating sealing adhesive is poured into the gap between the polarity terminal and the electrode post terminal clearance hole 04, even if condensation occurs, the condensate is prevented by the first insulating sealing adhesive layer 80 from seeping into the gap between the electrode post terminal and the electrode post terminal clearance hole 04, preventing the occurrence of a battery short circuit.

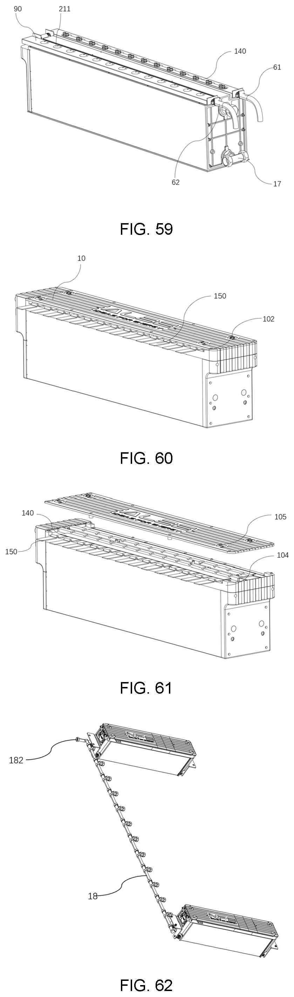

However, if the first insulating sealing adhesive is poured only at that part, the heat transfer pipe 3 remains exposed to the external environment. Condensation may still form on its surface, causing the large-capacity battery to become damp and potentially giving rise to safety problems. Therefore, to fully solve this problem, as shown in FIG. 59, in this embodiment, a second insulating sealing adhesive layer 90 is laid on the top plate 49 of the shell, completely covering the main body of the liquid cooling pipe, thereby enhancing the safety of the large-capacity battery.

It is to be noted that the electrical connection parts (first end surface 211) of the polarity terminal of each single cell 21 need to extend through the second insulating sealing adhesive layer 90 for connection to the first electrical connector 140 or the second electrical connector 150. The inlet end 61 and the outlet end 62 of the liquid cooling pipe extend through the insulating sealing adhesive layer 90 to be connected to the liquid cooling device. The first electrical connector 140 is a connecting device that enables the single cells 21 within the large-capacity battery to be connected in parallel. The second electrical connector 150 may serve as a connecting device for connecting two large-capacity batteries in series, or as a connecting device for connecting the large-capacity battery to an external load. FIG. 59 shows only the first electrical connector 140 on one side.

In addition, the second insulating sealing adhesive layer 90 may serve the following two functions:
1. Since the second insulating sealing adhesive layer 90 completely surrounds the main body of the liquid cooling pipe, it can, to some extent, fix or position the liquid cooling pipe, thereby enhancing the stability of the liquid cooling pipe on the large-capacity battery.
2. As the second insulating sealing adhesive layer 90 is laid on the top plate 49 of the shell and covers the main body of the liquid cooling pipe, it may enhance the flatness of the top structure of the large-capacity battery.

The second insulating sealing adhesive in this embodiment is typically a battery potting adhesive commonly used in batteries. For example, organic silicone thermally conductive potting adhesive may be used, which has good sealing, insulation, vibration resistance, heat dissipation, and waterproof functions.

In other embodiments, the second insulating sealing adhesive may be the same as the first insulating sealing adhesive, allowing the first insulating sealing adhesive layer 80 to be formed in a single glue injection method, both in the gap between the polarity terminals of the single cell 21 and the electrode post terminal clearance holes 04, and on the top plate 49 of the shell. Compared with this embodiment, a relatively large amount of the first insulating sealing adhesive is used. Generally, the cost of the first insulating sealing adhesive is higher than that of the second insulating sealing adhesive, resulting in the cost of such a large-capacity battery being higher than the cost of the large-capacity battery in this embodiment.

### Embodiment 22

In the embodiment above, the polarity terminal is directly exposed to the external environment, which presents a significant safety hazard due to the electrified state of the polarity terminal during operation. On the basis of this, as shown in FIGS. 60 and 61, in this embodiment on the basis of the embodiments above, an insulating protective cover 10 is disposed on the top of the large-capacity battery, providing insulation protection for the polarity terminal. This avoids potential safety hazards caused by exposure of the polarity terminals during operation of the large-capacity battery, and further avoids foreign objects from the exterior environment from falling into the polarity terminal positions and causing short-circuiting of the large-capacity battery, thereby enhancing the safety of the large-capacity battery.

It is to be noted that if the insulating protective cover 10 completely encloses the polarity terminal, it would make electrical connections of such a large-capacity battery more difficult. Therefore, in this embodiment, a slit 102 is formed in the sidewall of the insulating protective cover 10, which is parallel to the xz plane. This slit 102 allows the second electrical connector 150 to be connected to the polarity terminal, thus achieving an electrical connection.

It is further to be noted that there is a need to form a channel on the sidewall of the insulating protective cover 10 for the inlet end 61 and the outlet end 62 of the heat transfer pipe 3 to extend through.

To facilitate the electrical connection process, this embodiment designs the insulating protective cover 10 as a modular structure, as shown in FIGS. 52 and 61. The structure includes an insulating frame body 104 and an insulating cover plate 105 that covers the insulating frame body 104. The lower end of the insulating frame body 104 is used to fit with the top of the large-capacity battery and is fixed to the top of the large-capacity battery by screws, adhesive, or other methods. The upper end of the insulating frame body 104 is fitted with the insulating cover plate 105. A notch is formed on the upper sidewall of the insulating frame body 104, which is parallel to the xz plane. The notch, when combined with the insulating cover plate 105, forms the slit 102 above.

During assembly, the insulating frame body 104 may be fixed to the top of the large-capacity battery first. After that, the second electrical connector 150 is connected to the polarity terminal via the slit 102. After the glue injection, the insulating cover plate 105 is fixed to the upper end of the insulating frame body 104.

In addition, in Embodiment 21, during the glue injection process, to prevent the second insulating sealing adhesive from overflowing, a glue injection mold is required. However, after the glue injection, the mold needs to be removed, making the process more complicated. Furthermore, during the removal process, there is a possibility of damaging the structure of the second insulating sealing adhesive layer 90, which could reduce the sealing reliability.

However, in this embodiment, the insulating frame body 104 of the insulating protective cover 10 may be used as the glue injection mold. After the glue injection, no mold removal is required, and this approach also enhances the bonding strength between the insulating frame body 104 and the top of the large-capacity battery.

### Embodiment 23

As shown in FIG. 62, this embodiment is an energy storage device, including a case, an explosion vent manifold 18, and a plurality of large-capacity batteries in the embodiments described above located within the case, wherein explosion vent pipes 17 of the large-capacity batteries are in communication with the explosion vent manifold 18, and an outlet end 182 of the explosion vent manifold extends through the case. To clearly show the explosion vent manifold 18, FIG. 62 illustrates only a partial structure of the energy storage device.

When a single cell 21 within any large-capacity battery in the energy storage device undergoes thermal runaway, the thermal runaway gases are discharged only via the explosion vent manifold 18, reducing the risk of thermal runaway gas diffusion, explosion of the large-capacity battery, or even explosion of the energy storage device.

Embodiments 24 and 25 relate to a sealing method for a large-capacity battery, primarily intended to prevent the external environment from contacting the inner cavity of the large-capacity battery housing 5 via the electrode post terminal clearance holes 04 and the gap between the inner surface of the top plate 49 of the shell and the upper cover plate 42 of the single cell, thereby avoiding adverse effects on the performance of the large-capacity battery.

This may be primarily achieved by sealing at least one of the following parts:
1. The gap between the inner surface of the top plate 49 of the shell and the upper cover plate 42 of the single cell;
2. The gap between the electrode post terminal clearance hole 04 in the top plate 49 of the shell and the electrode post terminal 08 of the single cell or the terminal post adapter 53 located therein. For ease of description, the length direction of the shell 5 is defined as the x direction, the width direction as the y direction, and the height direction as the z direction. For an integral structure of the top plate 49 of the shell and the side plate 713 of the shell (the side plate parallel to the xz plane), the electrode post terminals 08 of the single cells generally do not extend through the electrode post terminal clearance hole 04, and part of the terminal post adapter 53 extends into the electrode post terminal clearance hole 04 to connect to the electrode post terminals 08 of the single cells. For a modular structure of the top plate 49 of the shell and the side plate 713 of the shell (including the side plate parallel to the xz plane and the side plate parallel to the yz plane), the electrode post terminals 08 of the single cells are generally located in the interior of the electrode post terminal clearance hole 04, and part of the terminal post adapter 53 extends into the electrode post terminal clearance hole 04 to connect to the electrode post terminals 08 of the single cells. For a modular structure of the top plate 49 of the shell and the side plate 713 of the shell (including the side plate parallel to the xz plane and the side plate parallel to the yz plane), the electrode post terminals 08 of the single cells may alternatively extend through the electrode post terminal clearance hole 04 to connect to the terminal post adapter 53.

For part 1, Embodiments 24 and 25 employ laser welding to weld the region of the top plate 49 of the shell surrounding the electrode post terminal clearance hole 04 to the upper cover plate 42 of the single cell, to achieve preliminary sealing.

However, as described in the Background, when the tops of the single cells 21 (i.e., the upper cover plates) are uneven, poor soldering may occur.

Therefore, to solve this problem, Embodiments 24 and 25 also seal part 2 by glue injection. a glue injection mold 45 is sleeved over the part of the terminal post adapter 53 extending through the electrode post terminal clearance hole 04 (i.e., the main body 22 of the terminal post adapter), forming a glue injection space between the glue injection mold 45, the terminal post adapter 53, the electrode post terminal 08 of the single cell, the upper cover plate 42 of the single cell, and the top plate 49 of the shell. The adhesive is injected into the glue injection space to achieve secondary sealing.

**It** is to be noted that the glue injection space above includes the gap between the electrode post terminal clearance hole 04 and the electrode post terminal 08 of the single cell or the terminal post adapter 53 located therein, as well as the gap between the inner surface of the top plate 49 of the shell and the upper cover plate 42 of the single cell along the welding track.

The insulating sealing adhesive used in Embodiments 24 and 25 is typically a battery potting adhesive commonly used in batteries. For example, organic silicone thermally conductive potting adhesive may be used, which has good sealing, insulation, vibration resistance, heat dissipation, and waterproof functions.

To prevent the insulating sealing adhesive from seeping into the electrolyte through poor soldering parts, which could adversely affect electrolyte performance, Embodiments 24 and 25 may employ an insulating sealing adhesive with relatively high viscosity that solidifies upon entering the poor soldering parts, thereby also sealing the poor soldering parts. For example, an epoxy resin adhesive may be used. Alternatively, an insulating sealing adhesive that does not react with the electrolyte and does not affect the performance of the electrolyte may be employed.

After the adhesive layer has cured, the glue injection mold 45 may be removed.

Embodiments 24 and 25 employ two sealing steps to ensure the sealing performance of the electrode post terminal clearance hole 04 in the top of the shell 5 of the large-capacity battery, thereby providing the shell 5 with enhanced sealing reliability.

Embodiments 24 and 25 are further described below with reference to the drawings and specific embodiments.

### Embodiment 24

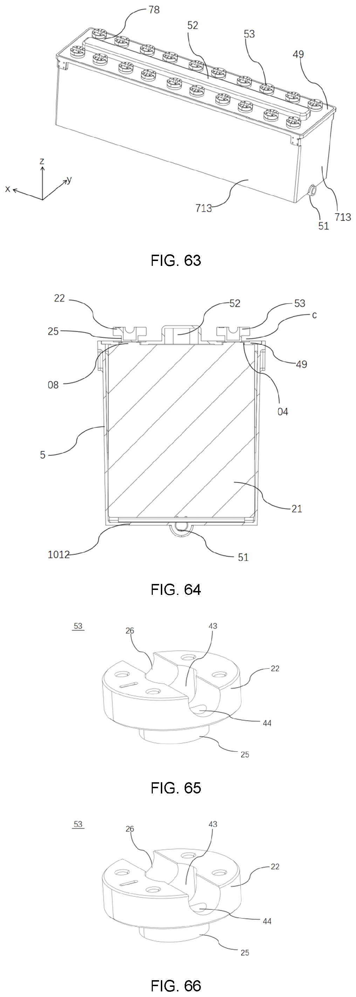

The structure of the large-capacity battery in this embodiment is shown in FIGS. 63 and 64. The large-capacity battery includes a shell 5, ten single cells 21, and twenty terminal post adapters 53. **In** other embodiments, the number of single cells 21 and terminal post adapters 53 may be adjusted according to actual requirements. Ten single cells 21 are arranged in parallel within the shell 5. An electrolyte shared chamber 51 is disposed in the bottom plate 1012 of the shell, and the electrolyte shared chamber 51 is in communication with electrolyte regions of the inner cavities of the single cells 21. A gas chamber 52 is disposed in the top plate 49 of the shell. The gas chamber 52 may be in communication with the gas regions of the inner cavities of the single cells 21. The gas chamber 52 may also serve as an explosion vent channel. When any single cell 21 undergoes thermal runaway, the thermal runaway gases generated in the inner cavity of the single cell 21 enter the gas chamber 52 and rupture the explosion vent mechanism disposed on either end of the gas chamber 52, allowing the gases to be discharged.

**In** other embodiments, a gas chamber 52 may not be disposed in the top plate 49 of the shell.

Referring to FIG. 64, in this embodiment, electrode post terminal clearance holes 04 corresponding to the electrode post terminals 08 of each single cell are formed in the top plate 49 of the shell.

The structure of the terminal post adapter 53 in this embodiment is shown in FIG. 65, and includes the main body 22 of the terminal post adapter and an electrical connecting post 25 disposed on the main body 22 of the terminal post adapter. The main body 22 of the terminal post adapter is cylindrical. **In** other embodiments, the main body 22 of the terminal post adapter may be a rectangular block. Conductive and thermally conductive metals, such as silver, copper, and aluminum, may be used. However, considering both cost and the combined electrical and thermal conductivity, aluminum is generally chosen as the material for the main body 22 of the terminal post adapter.

**In** this embodiment, the electrical connecting post 25 is a cylindrical body fixed to the bottom of the main body 22 of the terminal post adapter, with a cross-section of the cylindrical body adapted to the cross-section of the electrode post terminal 08 of the single cell. The electrical connecting post 25 connects to the electrode post terminal 08 of the single cell, as shown in FIG. 64.

For ease of connection between the electrical connecting post 25 and the electrode post terminal 08 of the single cell, in this embodiment, a blind hole 43 is formed in the main body 22 of the terminal post adapter. The bottom of the blind hole 43 is welded to the electrode post terminal 08 of the single cell to establish a connection between the two.

In this embodiment, a through groove 26 for mounting a liquid cooling pipe is disposed in the main body 22 of the terminal post adapter. After assembling a large-capacity battery using single cells 21 equipped with such a terminal post adapter 53, a liquid cooling pipe is mounted on the clamping portion of the terminal post adapter 53, enabling the heat concentrated at the electrode post terminal to be transferred from the terminal post adapter 53 to the liquid cooling pipe and dissipated. Similarly, when the ambient temperature is too low for the single cells 21 to start normally, an external temperature control apparatus may also use the liquid cooling pipe to heat the single cells 21. The through groove 26 extends along the x direction and penetrates two ends of the main body 22 of the terminal post adapter. The dimensions of the through groove 26 are designed to ensure that the liquid cooling pipe is clamped securely, thereby maintaining mounting stability while also ensuring efficient heat transfer between the liquid cooling pipe and the terminal post adapter 53.

To enable glue injection into the glue injection space, in this embodiment, a glue injection channel 44 is formed in the main body 22 of the terminal post adapter. The glue injection channel 44 penetrates the main body 22 along the thickness direction (z direction) of the main body 22 of the terminal post adapter and is in communication with the glue injection space (region c in FIG. 64 corresponds to part of the glue injection space). As can be seen from FIG. 65, in this embodiment, the glue injection channel 44 is preferably formed within the through groove 26, thereby shortening the glue injection path.

In other embodiments, the glue injection channel 44 may be L-shaped, with one segment formed radially in the main body 22 of the terminal post adapter and the other segment formed along the z direction, penetrating the main body 22 of the terminal post adapter and being in communication with the glue injection space. However, compared with this embodiment, such a structure is more complex and the glue injection path is longer. During the glue injection process, the adhesive may easily solidify within the glue injection channel 44, blocking the glue injection channel 44.

In other embodiments, the glue injection channel 44 may be omitted, leaving a gap between the glue injection mold 45 and the terminal post adapter 53 through which the insulating sealing adhesive is injected. However, during the injection process, the adhesive inevitably remains in the gap between the outer peripheral surface of the terminal post adapter 53 and the glue injection mold 45, making removal more difficult.

The structure of the glue injection mold 45 in this embodiment is shown in FIG. 66 and includes an annular adhesive retaining plate 46, shaped to fit the main body 22 of the terminal post adapter. Its inner diameter is slightly larger than the outer diameter of the main body 22 of the terminal post adapter, allowing it to be sleeved over the main body 22 of the terminal post adapter, while ensuring that no substantial gap exists between the two, avoiding adhesive from seeping into the gap between the two and making removal more difficult.

To enhance the stability of the glue injection mold 45, an annular support plate 47 extending circumferentially may be disposed on the outer side of the lower end of the annular adhesive retaining plate 46.

In this embodiment, the glue injection mold 45 is generally made of a material with low adhesion to the insulating sealing adhesive, which reduces removal difficulty. Materials such as polypropylene (PP) or polyethylene (PE) may be used. After removal, the glue injection mold 45 made from such materials may be reused.

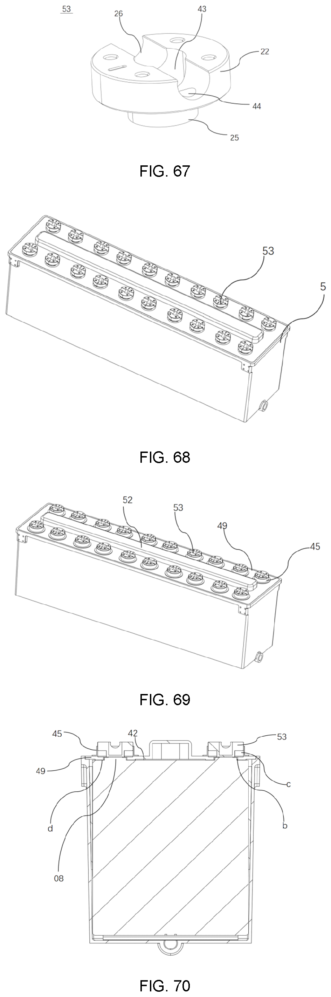

Sealing in this embodiment is achieved through the following steps:
As shown in FIG. 67, after the single cells 21 are placed into the shell 5, a preliminary sealing step is first performed. Laser welding is used to weld the region surrounding the electrode post terminal clearance hole 04 on the top plate 49 of the shell to the upper cover plate 42 of the single cell, thereby achieving preliminary sealing. The circle at position a in FIG. 67 indicates the welding track. Subsequently, as shown in FIG. 68, the terminal post adapters 53 are welded to the corresponding electrode post terminals 08 of the single cells. Thereafter, the secondary sealing step is performed. As shown in FIG. 69, the glue injection mold 45 is sleeved over the main body 22 of the terminal post adapter, and adhesive is injected into the glue injection space via the glue injection channel 44 in the terminal post adapter 53. Finally, after the insulating sealing adhesive has cured, the mold is removed.

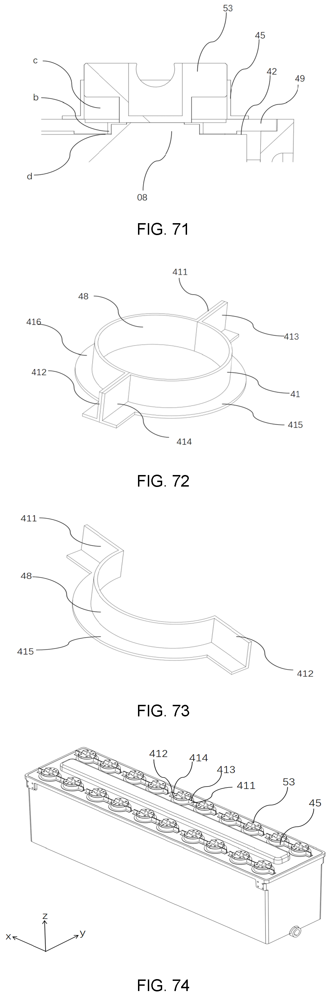

It is to be noted that during the glue injection process, the insulating sealing adhesive is injected to fill the entire glue injection space. The glue injection space includes the gap between the inner surface of the top plate 49 of the shell and the upper cover plate 42 of the single cell along the welding track (region d shown in FIGS. 70 and 71), the gap between the electrode post terminal clearance hole 04 and the electrode post terminal 08 of the single cell or the terminal post adapter 53 located therein (region b shown in FIGS. 70 and 71), and the gap between the glue injection mold 45 and the electrical connecting post 25 of the terminal post adapter 53 (region c shown in FIGS. 70 and 71).

Alternatively, the insulating sealing adhesive may be filled only in the gap between the inner surface of the top plate 49 of the shell and the upper cover plate 42 of the single cell along the welding track (i.e., region d).

Alternatively, the insulating sealing adhesive may be filled in both the gap between the inner surface of the top plate 49 of the shell and the upper cover plate 42 of the single cell along the welding track, and the gap between the electrode post terminal clearance hole 04 and the electrode post terminal 08 of the single cell or the terminal post adapter 53 located therein (i.e., regions d and b).

When the entire glue injection space is filled, the following advantages are further provided:
During long-term use, due to the temperature difference between the interior and exterior of the liquid cooling pipe, a small amount of condensation may form on the surface of the pipe. This condensation could potentially seep into region c, which may cause a short circuit within the same single cell 21.

In Embodiments 24 and 25, an insulating sealing adhesive layer 78 is disposed in region c (as shown in FIG. 63, where an insulating sealing adhesive layer 78 fills the gap between the glue injection mold 45 and the electrical connecting post 25 of the terminal post adapter 53). It is to be noted that during glue injection in region c, if the gaps in regions b and d are relatively large, the insulating sealing adhesive layer may inevitably seep into regions b and d. When condensation forms on the surface of a liquid cooling pipe attached to the terminal post adapter 53, the insulating sealing adhesive layer 78 prevents the condensation from entering the gap between the terminal post adapter 53 and the top plate 49 of the shell, preventing a short circuit within the cell.

### Embodiment 25

To further reduce removal difficulty, in this embodiment, the glue injection mold 45 is designed as a modular structure, as shown in FIGS. 72 and 73. The glue injection mold 45 includes a first semi-annular adhesive retaining plate 48 and a second semi-annular adhesive retaining plate 41. The first semi-annular adhesive retaining plate 48 and the second semi-annular adhesive retaining plate 41 are assembled to form the annular adhesive retaining plate 46 of Embodiment 24. The first semi-annular adhesive retaining plate 48 and the second semi-annular adhesive retaining plate 41 may be symmetrical or asymmetrical.

Similar to Embodiment 24, in this embodiment, a first semi-annular support plate 415 and a second semi-annular support plate 416 may be disposed on the outer lower ends of the first semi-annular adhesive retaining plate 48 and the second semi-annular adhesive retaining plate 41, respectively, extending along the circumferential direction.

To further reduce removal difficulty, in this embodiment, a first plate 411 and a second plate 412 are disposed at two ends of the first semi-annular adhesive retaining plate 48, and a third plate 413 and a fourth plate 414 are disposed at two ends of the second semi-annular adhesive retaining plate 41. The first plate 411 and the third plate 413 engage with each other, and the second plate 412 and the fourth plate 414 engage with each other, allowing the first semi-annular adhesive retaining plate 48 and the second semi-annular adhesive retaining plate 41 to snap together to form the annular adhesive retaining plate 46.

As shown in FIG. 74, when the glue injection mold 45 is fixed to the outer wall of the terminal post adapter main body 22 of the large-capacity battery, the first plate 411 and the third plate 413 are tightly engaged, and the second plate 412 and the fourth plate 414 are tightly engaged, all parallel to the xz plane.

After the insulating sealing adhesive has cured, removal may be performed at the parts between the first plate 411 and the third plate 413, and between the second plate 412 and the fourth plate 414. Since no insulating sealing adhesive adheres to the parts, removal is made easier.

## Claims

1. A large-capacity battery, comprising a shell, a plurality of single cells, and a liquid cooling pipe; the plurality of single cells are arranged in the shell along a same direction; the shell is provided with a shared chamber, an inner cavity of the shared chamber being in communication with inner cavities of all the single cells; electrode post terminal clearance holes corresponding to electrode post terminals of the single cells are formed in a top plate of the shell; the electrode post terminals of the single cells extend through the corresponding electrode post terminal clearance holes, and a region of the top plate of the shell corresponding to the electrode post terminal clearance hole is fixedly sealed to a housing of the single cell; portions of the electrode post terminals of the single cells extending through the electrode post terminal clearance holes are provided with clamping portions of the liquid cooling pipe; the liquid cooling pipe comprises a main body of the liquid cooling pipe, as well as an inlet end and an outlet end of a liquid cooling pipe, the main body of the liquid cooling pipe being fixed to the clamping portions of the liquid cooling pipe; an insulating sealing adhesive layer is laid on the top plate of the shell; and electrical connection parts of the electrode post terminals of the single cells extend through the insulating sealing adhesive layer, and the inlet end and the outlet end of the liquid cooling pipe extend through the insulating sealing adhesive layer.

2. The large-capacity battery as claimed in claim 1, wherein the main body of the liquid cooling pipe is located within the insulating sealing adhesive layer.

3. The large-capacity battery as claimed in claim 2, wherein the clamping portions of the liquid cooling pipe are through holes or through grooves formed in the electrode post terminals of the single cells.

4. The large-capacity battery as claimed in any one of claims 1 to 3, further comprising an insulating protective cover disposed on a top of the shell of the large-capacity battery, wherein the electrode post terminals of the single cells are located within the insulating protective cover; a length direction of the shell is defined as an x direction, a width direction as a y direction, and a height direction as a z direction; a passage through which the liquid cooling pipe extends is disposed in a sidewall of the insulating protective cover; and slits are formed in two sidewalls of the insulating protective cover parallel to an xz plane, through which the electrical connection parts of the electrode post terminals of the single cells are connected to electrical connectors.

5. The large-capacity battery as claimed in claim 4, wherein the insulating protective cover comprises an insulating frame body and an insulating cover plate; a lower end of the insulating frame body is fixed to a top of the large-capacity battery; an upper end of the insulating frame body is snap-fitted with the insulating cover plate; and notches are formed in upper ends of sidewalls of the insulating frame body parallel to an xz plane, the notches cooperating with the insulating cover plate to form the slits.

6. The large-capacity battery as claimed in claim 1, wherein the shared chamber is an electrolyte shared chamber, which is a liquid channel located in a bottom plate of the shell, the liquid channel being in communication with electrolyte regions of the inner cavities of the single cells.

7. The large-capacity battery as claimed in claim 1 or 6, wherein the shared chamber is a gas shared chamber, which is a gas channel located in the top plate of the shell, the gas channel being in communication with gas regions of the inner cavities of the single cells.

8. The large-capacity battery as claimed in claim 1, wherein protrusions are disposed on a surface of the top plate of the shell close to the single cells, and each protrusion is provided with stepped through holes penetrating the top plate of the shell and serving as the electrode post terminal clearance holes; smaller holes of the stepped through holes are closer to the single cells, and hole depths of the smaller holes are less than hole depths of larger holes.

9. A large-capacity battery, comprising a shell, a plurality of single cells, and terminal post adapters, wherein the plurality of single cells are arranged side by side within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; the electrode post terminals of the single cells are connected to the terminal post adapters via the electrode post terminal clearance holes, and regions of the shell corresponding to the electrode post terminal clearance holes are fixedly sealed to housings of the single cells; and an insulating sealing adhesive layer is disposed in a gap between a bottom surface of each terminal post adapter and the top plate of the shell, the bottom surface of each terminal post adapter being a surface thereof that is parallel to and close to the top plate of the shell.

10. The large-capacity battery as claimed in claim 9, wherein an insulating sealing adhesive layer is disposed on a top surface and side surfaces of each terminal post adapter; the top surface of the terminal post adapter is a surface thereof that is parallel to and away from the top plate of the shell; the side surfaces of the terminal post adapter are surfaces thereof that are perpendicular to a first surface and a second surface; the terminal post adapter is provided with an electrical connection component; and the electrical connection component is configured to connect to an electrical connector and to prevent insulating sealing adhesive from overflowing from part of a glue injection region.

11. The large-capacity battery as claimed in claim 10, further comprising an annular adhesive retaining protrusion, wherein the annular adhesive retaining protrusion is located at an edge of the top plate of the shell and extends along a circumferential direction of the top plate of the shell, to prevent the insulating sealing adhesive from overflowing from the top plate of the shell.

12. The large-capacity battery as claimed in any one of claims 9 to 11, further comprising an insulating protective cover disposed on a top of the shell of the large-capacity battery, wherein the terminal post adapters corresponding to the single cells are located within the insulating protective cover; a length direction of the shell is defined as an x direction, a width direction as a y direction, and a height direction as a z direction; a passage through which a liquid cooling pipe extends is disposed in a first sidewall of the insulating protective cover parallel to a yz plane; and slits are formed in two second sidewalls of the insulating protective cover parallel to an xz plane, through which an electrical connector may be connected to the terminal post adapter or the electrical connection component.

13. The large-capacity battery as claimed in claim 12, wherein the insulating protective cover comprises an insulating frame body and an insulating cover plate; a lower end of the insulating frame body is fixed to a top of the large-capacity battery; an upper end of the insulating frame body is snap-fitted with the insulating cover plate; and notches are formed in upper ends of sidewalls of the insulating frame body parallel to an xz plane, the notches cooperating with the insulating cover plate to form the slits.

14. The large-capacity battery as claimed in claim 13, wherein, along the x direction, adhesive retaining plates are disposed on first surfaces of two long side frames of the insulating frame body that are parallel to an xy plane; and in the y direction, a third gap is formed between each adhesive retaining plate and an outer side surface of an adjacent terminal post adapter.

15. The large-capacity battery as claimed in claim 13, wherein the insulating frame body comprises a second insulating frame and an insulating bottom plate fixed to the second insulating frame away from the insulating cover plate; electrical connecting post clearance holes corresponding to the terminal post adapters are formed in the insulating bottom plate, each electrical connecting post clearance hole having an aperture greater than an outer contour dimension of an electrical connecting post on the terminal post adapter and smaller than an outer contour dimension of the terminal post adapter.

16. The large-capacity battery as claimed in claim 15, wherein partition plates are disposed around each electrical connecting post clearance hole on the insulating bottom plate to form a terminal post adapter accommodating cavity; and a fourth gap is formed between sidewalls of the terminal post adapter accommodating cavity parallel to an xz plane and side surfaces of the terminal post adapter parallel to the xz plane.

17. The large-capacity battery as claimed in claim 16, wherein a protrusion extending is disposed on an outer edge of each electrical connecting post clearance hole along a circumferential direction thereof to form an annular adhesive retaining ring, to avoid the insulating sealing adhesive from flowing into the space among a sealing connector, the terminal post adapter, and the electrode post terminal of the single cell.

18. The large-capacity battery as claimed in claim 11, wherein the electrical connection component is an inverted L-shaped plate, a vertical plate of the inverted L-shaped plate being parallel to the xz plane and fixed to the top surface of the terminal post adapter to prevent insulating sealing adhesive from overflowing from part of the glue injection region, the part of the glue injection region being the top surface of the terminal post adapter; and a horizontal plate of the inverted L-shaped plate is parallel to the xy plane for connection to the electrical connector.

19. The large-capacity battery as claimed in claim 18, wherein the electrical connection component further comprises a first pressure-bearing plate that is parallel to the xz plane, extends in the x direction, and is connected to the horizontal plate.

20. The large-capacity battery as claimed in claim 11, wherein the electrical connection component comprises a first electrical connecting plate, a second electrical connecting plate, and a third connecting plate; the first electrical connecting plate is fixed to a top surface of a terminal post adapter, and a liquid cooling pipe clearance channel is formed in a mating surface of the first electrical connecting plate and the terminal post adapter; the third connecting plate is positioned between the first electrical connecting plate and the second electrical connecting plate and is configured to prevent insulating sealing adhesive from overflowing from part of the glue injection region, the part of the glue injection region being a top surface of the first electrical connecting plate; and the second electrical connecting plate is parallel to an xy plane and extends through the terminal post adapter for connection to the electrical connector.

21. The large-capacity battery as claimed in claim 20, wherein the electrical connection component further comprises an L-shaped electrical connecting plate, a vertical connecting plate of the L-shaped electrical connecting plate being connected to the second electrical connecting plate, and a horizontal connecting plate of the L-shaped electrical connecting plate being configured to connect to the electrical connector.

22. A large-capacity battery, comprising a shell, a plurality of single cells, and terminal post adapters, wherein the plurality of single cells are arranged side by side within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; the electrode post terminals of the single cells are connected to the terminal post adapters via the electrode post terminal clearance holes; an annular gap is formed between the electrode post terminal clearance hole and the electrode post terminal of the single cell, or between the electrode post terminal clearance hole and the terminal post adapter, or among the electrode post terminal clearance hole, the electrode post terminal of the single cell, and the terminal post adapter; and an insulating sealing adhesive layer is filled in the annular gap.

23. The large-capacity battery as claimed in claim 22, further comprising elastic adhesive retaining rings, wherein each elastic adhesive retaining ring is sleeved on the electrode post terminal of the single cell, a lower end of the elastic adhesive retaining ring is in close contact with an upper cover plate of the single cell, and an upper end of the elastic adhesive retaining ring is in close contact with an inner surface of the top plate of the shell.

24. The large-capacity battery as claimed in claim 23, wherein the lower end of the elastic adhesive retaining ring is bonded to the upper cover plate of the single cell.

25. The large-capacity battery as claimed in claim 23, wherein an annular notch is formed at an upper end of the elastic adhesive retaining ring such that the upper end of the elastic adhesive retaining ring forms a first mating surface and a second mating surface, the first mating surface being in close contact with a lower surface of the top plate of the shell, and the second mating surface being in close contact with a hole wall of the corresponding electrode post terminal clearance hole at an end thereof close to the upper cover plate of the single cell.

26. The large-capacity battery as claimed in claim 25, wherein a first annular groove is formed in the hole wall of the electrode post terminal clearance hole along a circumferential direction of the electrode post terminal clearance hole.

27. The large-capacity battery as claimed in any one of claims 22 to 26, wherein the terminal post adapter comprises a terminal post adapter main body and an electrical connecting post disposed on the terminal post adapter main body; the electrical connecting post extends into the electrode post terminal clearance hole and is connected to the electrode post terminal of the single cell located in an inner cavity of the shell; and a second annular groove is formed in the electrical connecting post along a circumferential direction thereof.

28. The large-capacity battery as claimed in any one of claims 22 to 26, wherein the electrode post terminal of the single cell extends into the electrode post terminal clearance hole and is connected to the terminal post adapter located outside the shell; and a second annular groove is formed in the electrode post terminal of the single cell along a circumferential direction thereof.

29. The large-capacity battery as claimed in any one of claims 22 to 26, wherein the terminal post adapter comprises a terminal post adapter main body and an electrical connecting post disposed on the terminal post adapter main body; the electrical connecting post extends into the electrode post terminal clearance hole and is connected to the electrode post terminal of the single cell located within the electrode post terminal clearance hole; a second annular groove is formed in the electrical connecting post along a circumferential direction thereof; and a second annular groove is formed in the electrode post terminal of the single cell along a circumferential direction thereof.

30. The large-capacity battery as claimed in any one of claims 22 to 26, wherein a gas chamber is disposed in the top plate of the shell.

31. A large-capacity battery, comprising a shell and n single cells arranged side by side within the shell, wherein n is an integer greater than 1; an inner cavity of the shell is in communication with inner cavities of all the single cells; electrode post terminal clearance holes corresponding to polarity terminals of the single cells are formed in a top plate of the shell; the polarity terminals of the single cells extend through the corresponding electrode post terminal clearance holes, and a region of the top plate of the shell corresponding to the electrode post terminal clearance hole is fixedly sealed to a housing of the single cell; and a first insulating sealing adhesive layer is disposed in a gap between the polarity terminal of each single cell and the corresponding electrode post terminal clearance hole, the first insulating sealing adhesive layer being an insulating sealing adhesive layer having temperature resistance higher than a temperature of thermal runaway gases.

32. The large-capacity battery as claimed in claim 31, further comprising a heat transfer pipe, wherein a heat transfer pipe clamping portion is disposed on a portion of the polarity terminal of the single cell extending through the electrode post terminal clearance hole, and the heat transfer pipe is fixed within the heat transfer pipe clamping portion.

33. The large-capacity battery as claimed in claim 32, wherein the heat transfer pipe clamping portion is a through hole or a through groove formed in the polarity terminal of the single cell.

34. The large-capacity battery as claimed in claim 32, wherein the heat transfer pipe is a liquid cooling pipe, and the liquid cooling pipe comprises a main body of the liquid cooling pipe, as well as an inlet end and an outlet end of a liquid cooling pipe; a second insulating sealing adhesive layer is laid on the top plate of the shell; electrical connection parts of the polarity terminals of the single cells extend through the second insulating sealing adhesive layer; the liquid cooling pipe main body is located within the second insulating sealing adhesive layer; and the inlet end and the outlet end of the liquid cooling pipe extend through the second insulating sealing adhesive layer.

35. The large-capacity battery as claimed in claim 34, wherein the second insulating sealing adhesive layer is a potting adhesive layer having temperature resistance lower than 320°C.

36. The large-capacity battery as claimed in claim 34, further comprising an insulating protective cover disposed on a top of the shell of the large-capacity battery, wherein the polarity terminals of the single cells are located within the insulating protective cover; a length direction of the shell is defined as an x direction, a width direction as a y direction, and a height direction as a z direction; a passage through which the heat transfer pipe extends is disposed in a sidewall of the insulating protective cover; and slits are formed in two sidewalls of the insulating protective cover parallel to an xz plane, through which the electrical connection parts of the electrode post terminals of the single cells are connected to electrical connectors.

37. The large-capacity battery as claimed in claim 36, wherein the insulating protective cover comprises an insulating frame body and an insulating cover plate; a lower end of the insulating frame body is fixed to a top of the large-capacity battery; an upper end of the insulating frame body is snap-fitted with the insulating cover plate; and notches are formed in upper ends of sidewalls of the insulating frame body parallel to an xz plane, the notches cooperating with the insulating cover plate to form the slits.

38. The large-capacity battery as claimed in claim 31, wherein the first insulating sealing adhesive layer is an epoxy resin potting adhesive layer having temperature resistance higher than 320°C.

39. The large-capacity battery as claimed in claim 31, further comprising 2n sealing connectors, wherein each sealing connector corresponds to one polarity terminal; each sealing connector is a hollow component, one end of the hollow component being sealingly connected to a region of the housing of the single cell surrounding the corresponding polarity terminal, and the other end of the hollow component being sealingly connected to a region of the top plate of the shell corresponding to the electrode post terminal clearance hole; and the first insulating sealing adhesive layer is located in a gap between the sealing connector and the polarity terminal.

40. An energy storage device, comprising a case, an explosion vent manifold, and a plurality of large-capacity batteries as claimed in any one of claims 31 to 39 located within the case, wherein explosion vent pipes of the large-capacity batteries are in communication with the explosion vent manifold, and an outlet end of the explosion vent manifold extends through the case.

41. A glue injection sealing method for a large-capacity battery, wherein the large-capacity battery comprises a shell, a plurality of single cells, and a terminal post adapter; the plurality of single cells are arranged in parallel within the shell, an electrolyte shared chamber is disposed in a bottom plate of the shell, and the electrolyte shared chamber is in communication with electrolyte regions of inner cavities of the single cells; electrode post terminal clearance holes corresponding to electrode post terminals of the single cells are formed in a top plate of the shell; and the method comprises the following steps:
preliminary sealing by welding:
welding a region of the top plate of the shell surrounding the electrode post terminal clearance holes to an upper cover plate of the single cell to achieve preliminary sealing;
secondary sealing by glue injection:
sleeving a glue injection mold over a terminal post adapter main body, forming a glue injection space between the glue injection mold, the terminal post adapter, the electrode post terminals of the single cells, the upper cover plate of the single cell within welding tracks, and the top plate of the shell; injecting adhesive into the glue injection space to achieve secondary sealing; and
removal:
after an adhesive layer is cured, removing the glue injection mold.

42. The glue injection sealing method for a large-capacity battery as claimed in claim 41, wherein adhesive is injected into the glue injection space via a glue injection channel formed in the terminal post adapter.

43. A terminal post adapter for a large-capacity battery, comprising a terminal post adapter main body, wherein at least one glue injection channel is formed in the terminal post adapter main body, the glue injection channel being a through hole penetrating the terminal post adapter main body and configured for communication with a glue injection space.

44. The terminal post adapter for a large-capacity battery as claimed in claim 43, further comprising electrical connecting posts fixed on and projecting from the terminal post adapter main body, wherein
blind holes are formed in the terminal post adapter main body, through which the electrical connecting posts are connected to electrode post terminals of single cells.

45. The terminal post adapter for a large-capacity battery as claimed in claim 44, wherein a through groove for mounting a heat transfer pipe is disposed in the terminal post adapter main body, and the through groove is sized to accommodate the heat transfer pipe.

46. A glue injection mold for a large-capacity battery, comprising an annular adhesive retaining plate, wherein the annular adhesive retaining plate is shaped to fit a terminal post adapter main body and is configured to be sleeved over the terminal post adapter main body, an inner wall of the annular adhesive retaining plate being in close contact with an outer wall of the terminal post adapter main body.

47. The glue injection mold for a large-capacity battery as claimed in claim 46, further comprising an annular support plate, wherein the annular support plate is disposed on an outer side of a lower end of the annular adhesive retaining plate and extends along a circumferential direction of the annular adhesive retaining plate.

48. The glue injection mold for a large-capacity battery as claimed in claim 46 or 47, wherein a material of the annular adhesive retaining plate is a PP material.

49. The glue injection mold for a large-capacity battery as claimed in claim 48, wherein the annular adhesive retaining plate is a modular member, comprising a first semi-annular adhesive retaining plate and a second semi-annular adhesive retaining plate that are symmetrical to each other.

50. The glue injection mold for a large-capacity battery as claimed in claim 49, wherein a first plate and a second plate are disposed at two ends of the first semi-annular adhesive retaining plate, respectively; and a third plate and a fourth plate are disposed at two ends of the second semi-annular adhesive retaining plate, respectively; and
the first plate engages with the third plate, and the second plate engages with the fourth plate, such that the first semi-annular adhesive retaining plate and the second semi-annular adhesive retaining plate are interlocked to form the annular adhesive retaining plate.
